# FASCICULE DE BREVET EUROPEEN

(11) **EP 2 548 322 B1**
(45) Date de publication et mention de la délivrance du brevet: **21.08.2019**
(21) Numéro de dépôt: 11712986.6
(22) Date de dépôt: 10.03.2011
(51) Int. Cl.: H04J 14/02

(54) **PROCEDE ET DISPOSITIF D'INSERTION/EXTRACTION D'UNE SOUS-BANDE OPTIQUE DANS UN SIGNAL OPTIQUE DE TYPE OFDM MULTI-BANDES**
VERFAHREN UND VORRICHTUNG ZUM EINFÜGEN/EXTRAHIEREN EINES OPTISCHEN TEILBANDES IN EIN OPTISCHES OFDM-MEHRBANDSIGNAL
METHOD AND DEVICE FOR INSERTING/EXTRACTING OPTICAL SUBBAND INTO MULTIBAND OPTICAL OFDM SIGNAL

(30) Priorité: 18.03.2010 FR 1051955
(43) Date de publication de la demande: 23.01.2013
(73) Titulaire: Orange, 75015 Paris (FR)
(72) Inventeur: PINCEMIN, Erwan, F-22290 Gommenec'h (FR)
(74) Mandataire: Cabinet Plasseraud
(86) Numéro de dépôt international: PCT/FR2011/050487
(87) Numéro de publication internationale: WO 2011/114042

(56) Documents cités:
- EP-A1- 1 492 260
- EP-A1- 1 744 477
- EP-A1- 2 134 007
- EP-A2- 1 628 424
- US-A1- 2007 286 605
- TAKADA K ET AL: "5 GHz-spaced 4200-channel two-stage tandem demultiplexer for ultra-multi-wavelength light source using supercontinuum generation", ELECTRONICS LETTERS, IEE STEVENAGE, GB, vol. 38, no. 12, 6 juin 2002 (2002-06-06), pages 572-573, XP006018320, ISSN: 0013-5194, DOI: DOI:10.1049/EL:20020418

## Description

L'invention concerne le domaine des dispositifs d'insertion/extraction de signaux optiques dans des réseaux de transmission optique.

Afin de faire face à la montée en débit des systèmes de transmission optique, les limites de la technologie de multiplexage en longueurs d'onde (WDM pour Wavelength Division Multiplexing en anglais) ont été régulièrement repoussées.

Sur des longues distances, pour que le débit puisse atteindre 100 Gbit/s par longueur d'onde, voire aller au-delà de ce seuil, il est possible de multiplexer des composantes à 10 Gbit/s (utilisant la technologie 10 GbEthernet) afin d'obtenir un canal à ultra haut débit de 100 Gbit/s (utilisant la technologie 100 GbEthernet).

Le besoin de désagréger ou d'agréger facilement de telles composantes dans un canal WDM en cours de transmission devient essentiel afin de permettre un haut degré de flexibilité dans les réseaux de transport optique à ultra haut débit. Cette désagrégation n'est intéressante aussi bien en termes de coût que de consommation énergétique qu'à la condition qu'elle soit tout optique.

Les formats de modulation pouvant être utilisés dans un premier temps à 100 Gbit/s sont basés sur une technique de modulation mono-porteuse (dite QPSK cohérent) peu adaptée à la commutation optique intra-canal.

Il est également possible d'utiliser le multiplexage en fréquences orthogonales (OFDM pour Orthogonal Frequency Division Multiplexing en anglais). Ce type de multiplexage est une technique de modulation multi-porteuse qui peut être mis en oeuvre en utilisant une ou plusieurs sous-bandes portant le débit du canal WDM.

Ainsi, du fait de son approche multi-bande, le multiplexage OFDM est le candidat idéal pour mettre en oeuvre la commutation optique intra-canal permettant de désagréger ou d'agréger facilement, à l'intérieur même d'un canal WDM, les sous-bandes OFDM indépendantes.

Il n'existe cependant pas actuellement, à notre connaissance, de dispositif permettant d'extraire ou d'insérer une sous-bande optique dans un canal optique composé de plusieurs sous-bandes optiques multiplexées.

Des exemples et modes de réalisation de l'art antérieur peuvent être trouvés dans le document EP 1 628 424 A2.La présente invention a pour objet de remédier à cet inconvénient.

Un objet de la présente invention est de proposer une architecture de commutateur tout optique capable de désagréger et d'agréger les sous-bandes multiplexées dans un signal, tel qu'un signal OFDM multi-bande par exemple.

Un autre objet de la présente invention est de proposer un commutateur tout optique flexible pouvant traiter n'importe quel canal WDM afin de désagréger ses sous-bandes constitutives, indépendamment de sa longueur d'onde ou de son débit.

Un autre objet de la présente invention est de proposer un commutateur tout optique flexible, pouvant traiter aussi bien le trafic montant que descendant.

La présente invention propose à cet effet un dispositif d'insertion/extraction d'au moins une sous-bande optique dans un canal optique composé d'une pluralité de sous-bandes optiques, le dispositif comprenant des moyens d'extraction aptes à extraire une première sous-bande optique appartenant au canal optique, des moyens de suppression arrangés pour obtenir un canal optique filtré à partir du canal optique dans lequel au moins une deuxième sous-bande est supprimée et un moyen de couplage apte à insérer une sous-bande optique de remplacement à la place de la deuxième sous-bande dans le canal optique filtré afin d'obtenir un canal optique modifié.

Avec un tel dispositif d'insertion/extraction, il est possible d'extraire ou de remplacer des sous-bandes multiplexées dans un signal sans repasser dans le domaine électronique. Ainsi, le dispositif ne comprend que des composants passifs, qui par définition sont très économes en consommation énergique, contrairement à une commutation électronique.

Avantageusement, le dispositif d'insertion/extraction comporte en outre un moyen de duplication apte à dupliquer le canal optique vers un premier port de duplication connecté aux moyens d'extraction et un deuxième port de duplication connecté aux moyens de suppression, les moyens d'extraction consistant en des moyens de filtrage passe-bande connectés au premier port de duplication afin de recevoir un premier canal optique dupliqué et arrangés pour laisser passer, vers un port d'extraction, la première sous-bande optique, et les moyens de suppression consistant en des moyens de filtrage coupe-bande connectés au deuxième port de duplication afin de recevoir un deuxième canal optique dupliqué et arrangés pour filtrer la deuxième sous-bande à dans ledit deuxième signal optique dupliqué afin d'obtenir le canal optique filtré. Il est ainsi possible d'extraire et de remplacer simultanément des sous-bandes multiplexées dans un même signal optique.

Dans un mode de réalisation avantageux, la largeur de la bande spectrale passante des moyens de filtrage passe-bande et/ ou de la bande spectrale rejetée par les moyens de filtrage coupe-bande est ajustable. Il est ainsi possible d'adapter le dispositif d'insertion/extraction au débit des sous-bandes optiques à traiter.

En particulier, la largeur de la bande spectrale passante des moyens de filtrage passe-bande et/ ou de la bande spectrale rejetée par les moyens de filtrage coupe-bande peut être comprise dans un intervalle allant de 7 GHz à 50 GHz. Cette gamme de fréquence permet de s'adapter aussi bien au traitement d'une seule sous-bande optique qu'au traitement d'un canal WDM entier. Plus précisément, la largeur de la bande spectrale passante des moyens de filtrage passe-bande et/ ou de la bande spectrale rejetée par les moyens de filtrage coupe-bande peut être comprise dans un intervalle allant de 7 GHz à 10 GHz. Cette gamme de fréquence permet de s'adapter au traitement d'au moins une sous-bande optique. Le dispositif d'insertion/extraction est ainsi totalement agnostique au débit binaire inséré et/ou extrait.

Dans un mode de réalisation avantageux, la fréquence centrale de la bande spectrale passante des moyens de filtrage passe-bande et/ ou de la bande spectrale rejetée par les moyens de filtrage coupe-bande est accordable. Le dispositif d'insertion/extraction peut alors s'adapter à n'importe quelle sous-bande optique, indépendamment de sa gamme de fréquences.

Dans un mode particulier de réalisation, les sous-bandes optiques du canal optique comprennent au moins deux signaux optiques multiplexés orthogonalement en fréquence.

Dans un autre mode particulier de réalisation, le dispositif comprend un module de gestion de dispositif, connecté aux moyens de filtrage passe-bande et aux moyens de filtrage coupe-bande, ledit module de gestion de dispositif étant arrangé pour ajuster la bande spectrale passante des moyens de filtrage passe-bande et la bande spectrale rejetée par les moyens de filtrage coupe-bande et pour accorder la fréquence centrale de la bande spectrale passante des moyens de filtrage passe-bande et de la bande spectrale rejetée par les moyens de filtrage coupe-bande. Ce mode de réalisation est particulièrement avantageux car il permet de reconfigurer à distance le dispositif d'insertion/extraction.

La présente invention vise par ailleurs un commutateur optique d'insertion/extraction d'au moins une sous-bande optique appartenant à au moins un canal optique compris dans un signal optique comportant une pluralité de canaux optiques multiplexés en longueur d'onde, ledit commutateur optique comprenant :
- un module de sélection apte à sélectionner au moins un canal optique comprenant au moins une sous-bande optique à extraire et/ou à remplacer parmi les canaux optiques multiplexés du signal optique ;
- au moins un dispositif d'insertion/extraction tel que décrit ci-avant, connecté au module de sélection et arrangé pour extraire au moins une sous-bande optique du canal optique sélectionné et/ou fournir un canal optique modifié obtenu à partir du canal optique sélectionné dans lequel au moins une sous-bande est insérée ;
- des moyens de substitution, connectés au dispositif d'insertion/extraction et arrangés pour obtenir un signal optique modifié par remplacement du au moins un canal optique sélectionné par le au moins un canal optique modifié.

Un tel commutateur optique permet d'effectuer l'insertion ou l'extraction d'une sous-bande optique située appartenant à un canal optique multiplexé situé au sein d'une pluralité de canaux optiques multiplexés en longueur d'onde.

Avantageusement, le commutateur optique d'insertion/extraction comprend en outre un moyen de duplication arrangé pour dupliquer le signal optique sur au moins un premier et un deuxième ports de sortie, le premier port de sortie étant connecté au module de sélection pour lui fournir un premier signal optique dupliqué et le deuxième porte de sortie étant connecté aux moyens de substitution pour leur fournir un deuxième signal optique dupliqué, et les moyens de substitution comprennent un module de blocage arrangé pour recevoir le deuxième signal optique dupliqué et pour fournir en sortie un signal optique filtré dans lequel le au moins un canal optique sélectionné est supprimé et un moyen de couplage arrangé pour coupler le signal optique filtré et le au moins un canal optique modifié afin d'obtenir le signal optique modifié.

Dans un mode de réalisation avantageux, le commutateur optique comprend un module de gestion de commutateur connecté au module de sélection et au module de blocage, ce module de gestion de commutateur étant arrangé pour commander le module de sélection et le module de blocage afin de respectivement sélectionner et supprimer le au moins un canal optique. Il est ainsi possible de reconfigurer à distance le commutateur optique. Un tel commutateur peut ainsi être entièrement reconfigurable à distance lorsque les moyens de filtrage des dispositifs d'insertion/extraction, le module de sélection et le module de blocage sont configurables à distance par l'intermédiaire de modules de gestion. Ceci permet de limiter les interventions des personnels en charge de la maintenance du commutateur optique.

Dans un autre mode particulier de réalisation dans lequel le commutateur optique comprend une pluralité de dispositifs d'insertion/extraction tels que décrits ci-avant, le module de sélection comprend une unité de désagrégation arrangée pour transmettre une pluralité de canaux optiques sélectionné, comportant chacun au moins une sous-bande optique à extraire et/ou remplacer, respectivement vers chacun des dispositifs d'insertion/extraction et une unité d'agrégation arrangée pour agréger les canaux optiques modifiés obtenus respectivement par chacun des dispositifs d'insertion/extraction dans un signal optique agrégé transmis aux moyens de substitution. Il est ainsi possible d'extraire et/ou remplacer des sous-bandes optiques situées dans différents canaux optiques multiplexés en longueurs d'onde.

La présente invention vise également un procédé d'insertion/extraction d'au moins une sous-bande optique dans un canal optique comportant une pluralité de sous-bandes optique, ledit procédé comprenant :
- l'extraction d'au moins une première sous-bande optique dans le canal optique ;
- l'obtention d'un canal optique filtré à partir du canal optique dans lequel au moins une deuxième sous-bande optique est supprimée ; et
- l'insertion d'au moins une sous-bande optique de remplacement dans le canal optique filtré, en remplacement de la deuxième sous-bande optique, afin d'obtenir un canal optique modifié.

La présente invention vise par ailleurs un procédé d'insertion/extraction d'au moins une sous-bande optique dans un signal optique comprenant une pluralité de canaux optiques multiplexés en longueurs d'onde, au moins un desdits canaux optiques comprenant une pluralité de sous-bandes optiques, ledit procédé comprenant :
- l'extraction d'au moins un desdits canaux optique comprenant au moins une sous-bande optique à extraire et/ou à remplacer ;
- l'application du procédé d'insertion/extraction décrit ci-avant au canal optique extrait, afin d'extraire au moins une première sous-bande optique du canal optique extrait et/ou d'obtenir au moins un canal optique modifié à partir du canal optique extrait dans lequel au moins une sous-bande optique de remplacement est insérée la place d'au moins une deuxième sous-bande optique ;
- l'obtention d'un signal optique modifié à partir du signal optique dans lequel le canal optique extrait est remplacé par le canal optique modifié.

II est ainsi possible d'extraire et/ou de remplacer une sous-bande optique appartenant à un canal optique multiplexé en longueur d'onde au sein d'un même signal optique.

Dans un mode particulier de réalisation, ce procédé d'insertion/extraction comprend une duplication préalable du signal optique en au moins un premier et un deuxième signaux optiques dupliqués, l'extraction du canal optique se faisant à partir du premier signal optique dupliqué et l'obtention du signal optique modifié se faisant à partir du deuxième signal optique dupliqué, et l'étape d'obtention du signal optique modifié comprend l'obtention d'un signal optique filtré à partir du deuxième signal optique dupliqué dans lequel la deuxième sous-bande optique est supprimée et l'agrégation du signal optique filtré avec le au moins un canal optique modifié afin d'obtenir le signal optique modifié.

Dans un mode de réalisation avantageux où une pluralité de sous-bandes optiques comprises dans une pluralité de canaux optiques sélectionnés sont à extraire et/ou remplacer, l'application du procédé d'insertion/extraction ci-avant est effectuée pour chacun desdits canaux optiques sélectionnés afin d'obtenir une pluralité de canaux optiques modifiés dans lesquels au moins une sous-bande optique de remplacement est insérée, la pluralité de canaux optiques modifiés est agrégée en un signal optique agrégé avant l'obtention du signal optique modifié et l'étape d'agrégation comprend l'agrégation du signal optique filtré avec le signal optique agrégé afin d'obtenir le signal optique modifié. Il est ainsi possible d'extraire et/ou de remplacer une sous-bande optique appartenant à plusieurs canaux optiques multiplexés en longueurs d'onde au sein d'un même signal optique.

D'autres caractéristiques et avantages de l'invention apparaîtront à l'examen de la description détaillée ci-après, et des dessins annexés sur lesquels :
- la figure 1 représente schématiquement un dispositif d'insertion/extraction selon un mode particulier de réalisation de la présente invention ;
- la figure 2 illustre les étapes d'un procédé d'insertion/extraction d'au moins une sous-bande optique dans un canal optique selon un mode particulier de réalisation de la présente invention ;
- la figure 3 représente schématiquement un premier mode de réalisation d'un commutateur optique utilisant le dispositif d'insertion/extraction selon un mode de réalisation particulier de la présente invention ;
- la figure 4 illustre les étapes d'un procédé d'insertion/extraction d'au moins une sous-bande optique dans un canal optique multiplexé dans un signal optique selon un mode particulier de réalisation de la présente invention ;
- la figure 5 représente schématiquement un deuxième mode de réalisation d'un commutateur optique utilisant le dispositif d'insertion/extraction selon un mode particulier de réalisation de la présente invention ;
- la figure 6 illustre les étapes d'un procédé d'insertion/extraction de plusieurs sous-bandes optiques appartenant à différents canaux optiques multiplexés dans un même signal optique selon un mode particulier de réalisation de la présente invention ;
- la figure 7 représente schématiquement un troisième mode de réalisation bidirectionnel d'un commutateur optique utilisant le dispositif d'insertion/extraction selon un mode particulier de réalisation de la présente invention.

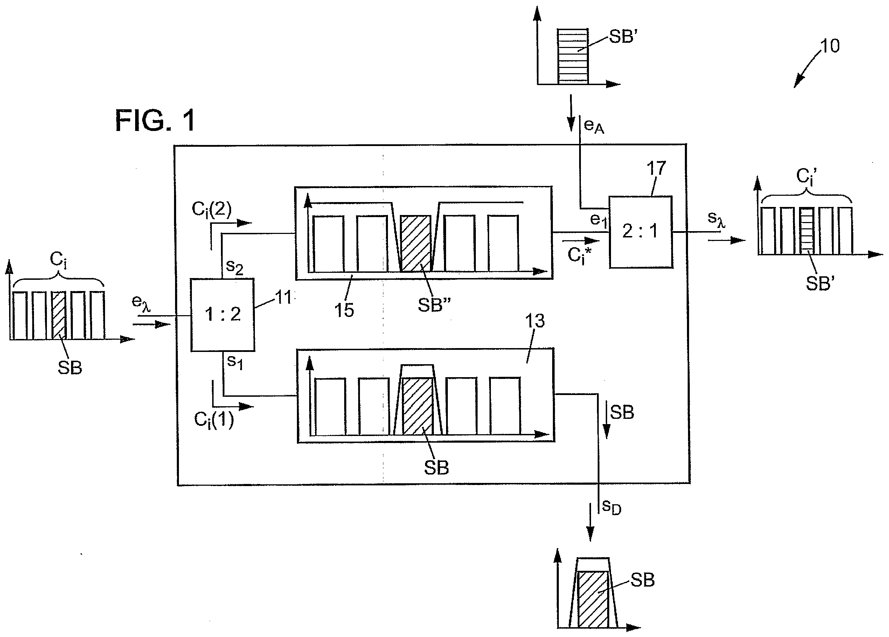

On se réfère tout d'abord à la **figure 1** sur laquelle est illustré un dispositif d'insertion/extraction 10 d'une sous-bande optique dans un canal optique composé d'une pluralité de sous-bandes optiques.

Par le terme « sous-bande optique », on entend ici un signal optique situé dans une bande de fréquence prédéterminée et pouvant être multiplexé avec d'autres « sous-bandes optiques » similaires pour former un signal multiplexé, par exemple en fréquence au moyen de la technologie OFDM.

Par le terme « canal optique », on entend ici un signal optique situé substantiellement à une longueur d'onde prédéterminée et pouvant être multiplexé en longueur d'onde avec d'autres canaux similaires pour former un signal multiplexé en longueur d'onde.

Ainsi, dans le contexte de la présente invention, le canal optique Cᵢ considéré est composé d'une pluralité de sous-bandes optiques multiplexées (à titre purement illustratif au nombre de cinq sur la figure 1, mais il est évident qu'un nombre quelconque de sous-bandes optiques peuvent composer ce canal optique), par exemple en fréquence au moyen de la technologie OFDM.

Parmi ces sous-bandes optiques peuvent se trouver une première sous-bande optique (notée SB) destinée à être extraite aussi bien qu'une deuxième sous-bande optique (notée SB") destinée à être remplacée par une sous-bande optique de remplacement SB' située substantiellement dans la même bande de fréquences.

Le dispositif d'insertion/extraction 10 sert ainsi aussi bien à extraire la première sous-bande optique SB qu'à remplacer la deuxième sous-bande optique SB" par la sous-bande optique de remplacement au sein du canal optique Cᵢ, voire à faire ces deux opérations simultanément, et peut être utilisé avantageusement au sein d'un noeud optique d'un réseau de transmission optique pour extraire et/ou ajouter des données sur des signaux optiques.

La première sous-bande optique SB et la deuxième sous-bande optique SB" peuvent coïncider substantiellement dans le domaine fréquentiel, voire constituer une unique sous-bande. optique SB destinée à être à la fois extraite et remplacée par une sous-bande de remplacement SB'.

Le dispositif d'insertion/extraction 10 comprend pour cela des moyens d'extraction 13 aptes à extraire la première sous-bande optique SB appartenant au canal optique Cᵢ, des moyens de suppression 15 permettant d'obtenir un canal optique filtré Cᵢ*, à partir du canal optique Cᵢ, dans lequel au moins une deuxième sous-bande SB" est supprimée et un moyen de couplage 17 apte à insérer une sous-bande optique de remplacement SB' à la place de la deuxième sous-bande SB" dans le canal optique filtré Cᵢ*, afin d'obtenir un canal optique modifié Cᵢ'.

Le dispositif 10 est ainsi capable, d'une part, d'extraire la première sous-bande optique SB et, d'autre part, de remplacer la deuxième sous bande SB" par une sous-bande optique de remplacement SB' qui est ainsi insérée au sein du canal optique modifié Cᵢ',

Le dispositif d'insertion/extraction 10 peut comprendre en outre un moyen de duplication 11, comprenant un port d'entrée e_{λ}, un premier port de duplication s₁ connecté aux moyens d'extraction 13 et un deuxième port de duplication s₂ connecté aux moyens de suppression 15.

Le port d'entrée e_{λ}, correspondant au port d'entrée principal du dispositif d'insertion/extraction 10, sert à recevoir un canal optique Cᵢ composé d'une pluralité de sous-bandes optiques.

Le moyen de duplication 11 est apte à dupliquer le canal optique Cᵢ vers le premier port de duplication s₁, sous la forme d'un premier signal dupliqué Cᵢ(1), et vers le deuxième port de duplication s₂, sous la forme d'un deuxième signal dupliqué Cᵢ(2).

Cette duplication peut être effectuée par exemple en divisant le canal optique reçu Cᵢ en deux signaux optiques dupliqués Cᵢ(1) et Cᵢ(2). Dans le cas d'une division de puissance, la puissance de ces canaux dupliqués est réduite par rapport au canal Cᵢ d'origine. La répartition de la puissance optique du canal optique d'entrée entre les deux signaux dupliqués Cᵢ(1) et Cᵢ(2) est avantageusement de l'ordre de 50/50, ou peut se situer dans un intervalle de répartition allant de 50/50 à 45/55, afin d'obtenir deux signaux dupliqués de puissance globalement similaire. Le moyen de duplication 11 peut ainsi consister en un coupleur 50/50, voire un coupleur 55/45.

Dans un mode de réalisation, les moyens d'extraction 13 du dispositif 10 peuvent consister en particulier en des moyens de filtrage passe-bande connectés au premier port de duplication s₁ des moyens de duplication 11, pour recevoir un des canaux optiques dupliqués, en l'occurrence le canal optique Cᵢ(1).

Ces moyens de filtrage 13 sont arrangés pour laisser passer la première sous-bande optique SB à extraire vers un port d'extraction s_{D} correspondant à un port de sortie du dispositif d'insertion/extraction 10. Pour ce faire, les moyens de filtrage 13 sont « passe-bande » et laissent passer les fréquences optiques situées dans une bande spectrale prédéterminée tout en filtrant les fréquences optiques situées en dehors de cette bande spectrale. Afin de laisser passer la première sous-bande optique SB, il convient donc de choisir les moyens de filtrage 13 afin que leur bande spectrale passante contienne la première sous-bande optique SB.

Ainsi, grâce aux moyens de filtrage 13, le port d'extraction s_{D} délivre un signal optique filtré composé de la seule première sous-bande optique SB, comme illustré sur la figure 1. Ces moyens de filtrage 13 permettent donc d'extraire la première sous-bande optique SB du canal optique Cᵢ(1).

Dans ce mode de réalisation, les moyens de suppression 15 du dispositif 10 peuvent consister en particulier en des moyens de filtrage coupe-bande 15 connectés au deuxième port de duplication s₂ des moyens de duplication 11, pour recevoir un autre des canaux optiques dupliqués, en l'occurrence le canal optique Cᵢ(2).

Ces moyens de filtrage 15 sont arrangés pour recevoir le canal optique dupliqué Cᵢ(2) et fournir en sortie un canal optique filtré Cᵢ* obtenu à partir de ce canal optique dupliqué Cᵢ(2) (donc à partir du signal optique d'entrée Cᵢ) dans lequel la deuxième sous-bande SB" est supprimée par filtrage.

Pour ce faire, les moyens de filtrage 15 sont « coupe-bande » et bloquent les fréquences optiques situées dans une bande spectrale prédéterminée tout en laissant passer les fréquences optiques situées en dehors de cette bande spectrale. Afin de bloquer la deuxième sous-bande optique SB", il convient donc de choisir les moyens de filtrage 15 afin que leur bande spectrale bloquante contienne la deuxième sous-bande optique SB".

Si la première sous-bande optique SB et la deuxième sous-bande optique SB" coïncident fréquentiellement, le canal optique filtré Cᵢ* obtenu en sortie des moyens de filtrage 15 est ainsi complémentaire au signal optique filtré obtenu en sortie des moyens de filtrage 13, et ces deux signaux filtrés additionnés correspondent au canal optique d'entrée Cᵢ.

Le moyen de couplage 17 présente pour sa part un port d'entrée e₁ connecté à la sortie des moyens de suppression 15, ainsi qu'un port d'insertion e_{A} et un port de sortie s_{λ}.

Le port d'insertion e_{A} correspond à un port d'entrée du dispositif d'insertion/extraction 10 et permet de recevoir une sous-bande optique de remplacement/insertion SB', telle qu'illustrée sur la figure 1, afin de l'insérer dans le canal optique filtré Cᵢ* par les moyens de filtrage coupe-bande 15.

Le port de sortie s_{λ} correspond au port de sortie principal du dispositif d'insertion/extraction 10 et sert à fournir un signal optique modifié C₁' dans lequel la sous-bande SB" a été remplacée par la sous-bande SB', comme illustré sur la figure 1.

Le moyen de couplage 17 est donc arrangé pour coupler le canal optique Cᵢ* filtré par les moyens de filtrage coupe-bande 15 avec la sous-bande optique SB' insérée grâce au port d'insertion e_{A}, afin d'obtenir le signal optique modifié Cᵢ' correspondant à l'addition de ces deux signaux et de fournir ce signal optique modifié Cᵢ' en sortie, sur le port de sortie s_{λ}. Un tel moyen de couplage 17 peut consister en un coupleur 50/50, voire un coupleur 55/45.

Pour illustrer simplement le principe de l'invention, le dispositif d'insertion/extraction 10 de la figure 1 est de degré 2, c'est-à-dire qu'il ne permet qu'une seule insertion de sous-bande de remplacement à la fois. Il est cependant tout à fait envisageable de construire un dispositif d'insertion/extraction 10 de degré n, où n>2, auquel cas il faut que le moyen de duplication 11 comporte n ports de duplication auxquels sont connectés respectivement des moyens de filtrage coupe-bande similaire au moyen de filtrage 15. Chaque signal optique filtré issu de l'un des ces moyens de filtrages coupe-bande peut alors permettre l'insertion d'une sous-bande de remplacement, grâce à un moyen de couplage similaire au moyen de couplage 17.

Similairement, la figure 1 illustre le cas où une seule sous-bande optique est extraite et/ou insérée. Il est cependant tout à fait possible d'extraire et/ou insérer un nombre n' de sous-bandes optiques, où n'>1, selon le besoin de désagrégation au niveau du noeud optique où est situé le dispositif d'insertion/extraction 10, auquel cas la bande spectrale bloquée par les moyens de filtrage coupe-bande 15 doit recouvrir les bandes de fréquences couvertes par les n' sous-bandes à remplacer.

Si ces n' sous-bandes optiques sont essentiellement contiguës, il est par exemple possible d'employer, pour les moyens de filtrage 13, un unique filtre passe-bande présentant une bande spectrale passante unique d'une largeur suffisante pour couvrir les n' sous-bandes à remplacer et, pour les moyens de filtrage 15, un unique filtre coupe-bande présentant une bande spectrale bloquante unique d'une largeur suffisante pour couvrir les n' sous-bandes à remplacer.

Dans un mode de réalisation avantageux, la largeur de la bande spectrale passante des moyens de filtrage passe-bande 13 et/ou de la bande spectrale rejetée par les moyens de filtrage coupe-bande 15 est ajustable entre une valeur minimale et une valeur maximale.

L'ajustement de la largeur de la bande spectrale des moyens de filtrage passe-bande 13 et/ou des moyens de filtrage coupe-bande 15 peut être réalisé par exemple par l'intermédiaire d'un module de gestion du dispositif (non illustré sur la figure 1), connecté aux moyens de filtrage passe-bande 13 et aux moyens de filtrage coupe-bande 15.

Dans un premier mode de réalisation, ce module de gestion du dispositif peut être intégré dans le dispositif d'insertion/extraction 10. Cependant, dans un autre mode de réalisation, ce module de gestion du dispositif est positionné à distance de ce dispositif 10 et peut commander une pluralité de dispositifs 10. Dans ce cas, un tel module de gestion du dispositif peut notamment être en charge de la reconfiguration à distance d'un système de transmission WDM intégrant une pluralité de dispositifs 10 tels que décrits dans la présente demande.

Il est ainsi possible de commander à distance le nombre de sous-bandes optiques devant être insérées ou extraites par le(s) dispositifs) 10, et donc de reconfigurer à distance ce(s) dispositif(s) en fonction du débit le(s) traversant. Dans ce dernier mode avantageux de réalisation, le fait de pouvoir adapter les bandes spectrales filtrées dans le dispositif d'insertion/extraction 10 permet d'adapter ce dispositif à n'importe quel type de débit. Un tel dispositif est alors considéré comme étant « agnostique au débit ».

La valeur minimale de largeur de bande spectrale peut être de l'ordre de 7 à 10 GHz, par exemple, pour extraire une seule sous-bande de type OFDM, auquel cas le trafic extrait est alors lui aussi minimal en termes de débit. La valeur maximale de largeur de la bande spectrale des moyens de filtrage 13 et 15 peut être de l'ordre de 50 GHz, ce qui correspond à un espacement spectral classique entre canaux WDM. Avec une telle largeur maximale de bande spectrale, la totalité du canal optique Cᵢ est alors extraite et/ou remplacée.

De préférence, le débit de la ou des sous-bande(s) ajoutée(s) par le port d'insertion e_{A} est inférieur ou égal au débit de la ou des sous-bande(s) supprimée(s) par les moyens de suppression 15. Il peut ainsi être envisagé de ne pas remplacer en totalité la capacité supprimée (et potentiellement extraite), en insérant un nombre de sous-bandes inférieur au nombre de sous-bandes supprimées/extraites ou en insérant des sous-bandes de largeur spectrale inférieure aux sous-bandes supprimées/extraites.

Dans un autre mode de réalisation avantageux, la fréquence centrale de la bande spectrale passante des moyens de filtrage passe-bande 13 et/ou de la bande spectrale rejetée par les moyens de filtrage coupe-bande 15 est accordable, par exemple par l'intermédiaire du module de gestion du dispositif tel que décrit ci-avant, ce qui permet une gestion à distance du dispositif 10.

Il est ainsi possible d'extraire et/ou remplacer des sous-bandes optiques situées à des fréquences optiques différentes en décalant les bandes spectrales passante et filtrante pour qu'elles recouvrent substantiellement ces sous-bandes optiques.

Dans ce dernier mode avantageux de réalisation, le fonctionnement du dispositif d'insertion/extraction 10 n'est plus dépendant d'une certaine gamme de fréquences. On dit alors que le dispositif d'insertion/extraction 10 est incolore (« colourless » en anglais).

Dans un mode de réalisation particulier de l'invention, la bande spectrale passante des moyens de filtrage passe-bande 13 coïncide substantiellement avec la bande spectrale filtrée par les moyens de filtrage coupe-bande 15. Ce mode est particulièrement adapté au cas où la première bande spectrale SB à extraire coïncide fréquentiellement avec la deuxième bande spectrale SB" à remplacer. La mise en coïncidence de ces deux bandes spectrales peut être réalisée par le module de gestion du dispositif décrit ci-avant, ce qui permet d'effectuer le remplacement d'une sous-bande optique grâce au dispositif d'insertion/extraction 10.

Avantageusement, les moyens de filtrage 13 et 15 présentent un profil essentiellement carré (« square flat-top » en anglais), afin d'optimiser la sélectivité des sous-bandes à insérer et à extraire.

Avec les caractéristiques ci-avant, il est possible de disposer d'un noeud dont la capacité d'agrégation et/ou désagrégation est flexible. Le noeud optique disposant d'un tel dispositif d'insertion/extraction 10 peut donc être adapté au débit prélevé ou ajouté.

Dans un mode de réalisation particulier, le canal optique Cᵢ est composé de sous-bandes optiques multiplexées orthogonalement en fréquence, par exemple à l'aide de la technologie OFDM. Le principe de la présente invention peut cependant s'appliquer à d'autres types de canaux optiques comprenant des sous-bandes optiques multiplexées au moyen d'une autre technologie.

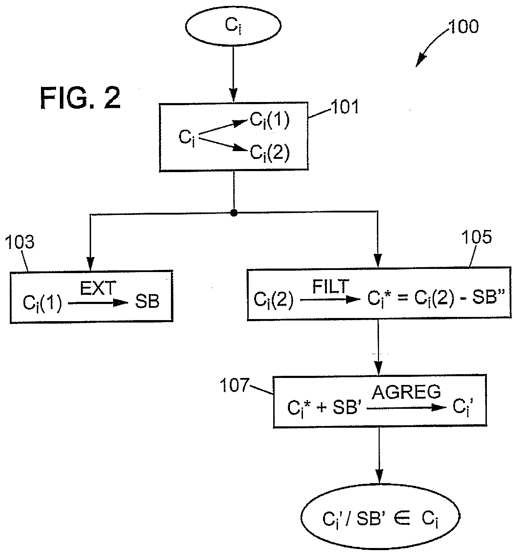

On se réfère maintenant à la **figure 2** sur laquelle sont illustrées les étapes d'un procédé 100 de remplacement d'une sous-bande optique dans un canal optique selon la présente invention, ces étapes pouvant être avantageusement effectuées au moyen du dispositif d'insertion/extraction 10 de la figure 1.

Ici encore, le procédé 100 de remplacement s'applique au remplacement d'une sous-bande optique SB dans un canal optique Cᵢ comportant une pluralité de sous-bandes optique, multiplexées par exemple en fréquence selon la technique OFDM.

Le procédé 100 comprend, d'une part, une étape 103 d'extraction d'une première sous-bande optique SB à extraire dans le canal optique Cᵢ.

Cette étape d'extraction 103 comprend avantageusement le filtrage passe-bande de la sous-bande optique SB à extraire, qui peut être effectué à l'aide de moyens similaires aux moyens de filtrage passe-bande 13 décrits précédemment, lesquels peuvent consister en un filtrage passe-bande accordable par exemple.

Le procédé 100 comprend, d'autre part, une étape 105 d'obtention d'un canal optique filtré Cᵢ*, à partir du canal optique Cᵢ dans lequel une deuxième sous-bande optique SB" à remplacer est supprimée.

Cette étape d'obtention 105 comprend avantageusement le filtrage coupe-bande de la sous-bande optique SB" à remplacer, à l'aide de moyens similaires au moyen de filtrage coupe-bande 15 décrit précédemment, lesquels peuvent consister en un filtrage passe-bande accordable par exemple.

Une fois le canal optique filtré Cᵢ* obtenu, le procédé 100 d'insertion/extraction comprend une étape 107 d'insertion d'au moins une sous-bande optique de remplacement SB' dans le canal optique filtré Cᵢ*, en remplacement de la deuxième sous-bande optique SB" supprimée dans le canal optique Cᵢ, afin d'obtenir un canal optique modifié Cᵢ' contenant la sous-bande optique SB'. La fonction de remplacement d'une sous-bande optique SB par une sous-bande optique SB' est ainsi remplie.

Cette étape d'insertion 107 peut être effectuée à l'aide de moyens similaires au moyen de couplage 17 décrit précédemment, lequel peut consister en un coupleur 50:50 par exemple.

De façon avantageuse, le procédé 100 d'insertion/extraction comprend une étape préalable 101 de duplication du canal optique Cᵢ en une pluralité de canaux optiques dupliqués, en l'occurrence Cᵢ(1) et Cᵢ(2) sur la figure 2. Cette étape de duplication 101 peut être effectuée à l'aide de moyens similaires au moyen de duplication 11 décrit précédemment, lequel peut consister en un coupleur 50:50 par exemple.

Une fois la pluralité de canaux optiques dupliqués Cᵢ(1) et Cᵢ(2) obtenue, l'extraction 103 de la première sous-bande optique est effectuée au moyen d'un des canaux optiques dupliqués, le canal Cᵢ(1) en l'occurrence, et l'obtention 105 du canal optique filtré Cᵢ* est effectuée au moyen d'un autre des canaux optiques dupliqués, le canal Cᵢ(2) en l'occurrence.

L'étape d'extraction 103 d'une part, et les étapes d'obtention 105 et d'insertion 107 d'autre part, peuvent être effectuées parallèlement les unes aux autres ou dans un ordre indifférent.

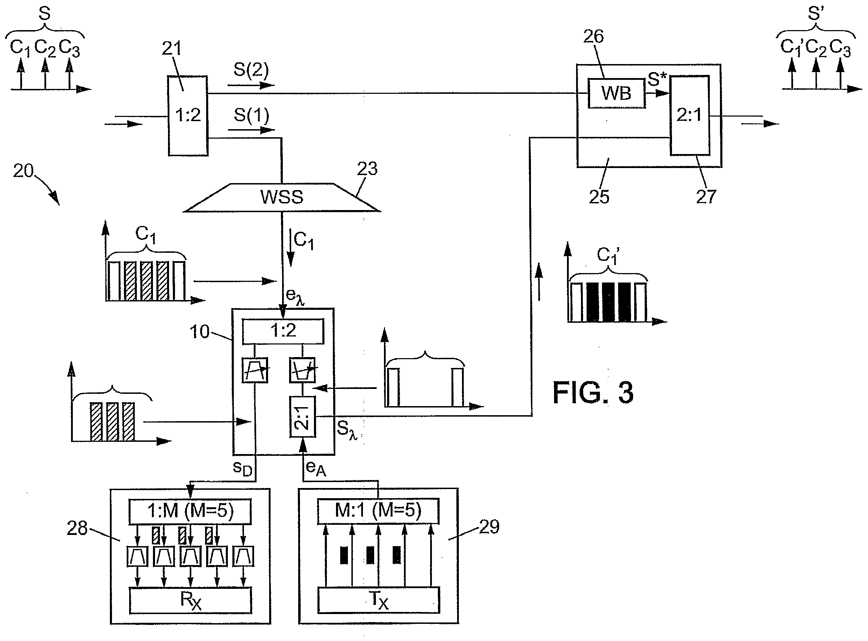

On se réfère maintenant à la **figure 3** sur laquelle est illustré un commutateur optique d'insertion/extraction 20 utilisant le dispositif d'insertion/extraction 10 illustré sur la figure 1.

Dans l'exemple illustratif de la figure 3, le signal optique S comprend 3 canaux C₁,C₂,C₃ multiplexés en longueurs d'ondes, le premier canal optique C1 étant composé de 5 sous-bandes, mais il est évident qu'un nombre quelconque de canaux optiques peuvent composer le signal optique, et que ces canaux peuvent comporter un nombre quelconque de sous-bandes optiques.

Le commutateur optique d'insertion/extraction comprend d'une part un module de sélection 23 (ou WSS pour Wavelength Selective Switch en anglais) qui reçoit, sur son port d'entrée, le signal optique S (ou une copie de ce signal optique S) et sélectionne un des canaux optiques multiplexés dans ce signal S, en l'occurrence le canal optique C₁ dans l'exemple de la figure 3, comprenant au moins une sous-bande optique à extraire et/ou à remplacer, afin de le fournir sur son port de sortie. Un tel module de sélection 23 peut consister en un commutateur sélectif de longueur d'onde (WSS pour Wavelength Selective Switch en anglais).

Un tel commutateur sélectif de longueur d'onde peut être reconfigurable afin de permettre d'envoyer n'importe lequel des canaux optiques vers l'un de ses ports de sortie. Il est en particulier reconfigurable à distance par l'intermédiaire d'un module de gestion de commutateur permettant de sélectionner le canal optique à traiter. Un tel module de gestion de commutateur est similaire au module de gestion du dispositif décrit précédemment.

Le port de sortie du module de sélection 23 est connecté au port d'entrée principal e_{λ} d'un dispositif d'insertion/extraction 10 similaire à celui décrit à la figure 1, afin d'extraire et/ou de remplacer une ou plusieurs sous-bandes optiques du canal optique C₁, Ce dispositif 10 permet d'extraire au moins une première sous-bande optique du canal optique sélectionné C₁ et/ou de fournir un canal optique modifié Cᵢ' obtenu à partir du canal optique sélectionné C₁ dans lequel au moins une sous-bande de remplacement est insérée.

Afin d'illustrer d'une autre façon le principe d'extraction de la présente invention, le signal C₁ illustré sur la figure 1 présente 5 sous-bandes optiques dont la deuxième, troisième et quatrième sous-bandes optiques sont extraites par le dispositif d'insertion/extraction 10.

Le port d'extraction du dispositif d'insertion/extraction 10 est connecté à l'entrée d'un module de réception optique 28, afin de fournir à ce module 28 la ou les sous-bande(s) optique(s) extraite(s) par le dispositif d'insertion/extraction 10.

Ce module de réception optique 28 peut être composé d'un démultiplexeur séparant les différentes sous-bandes optiques dont chaque sortie est respectivement connectée à un récepteur optique, par exemple un détecteur cohérent à diversité de phase et de polarisation, dédié à la sous-bande optique à recevoir.

Un tel démultiplexeur peut être constitué d'un coupleur l:n qui envoie vers n récepteurs optiques les n sous-bandes préalablement pré-filtrés optiquement de manière à les isoler le plus possible de leurs voisines, afin de réduire le problème de « crosstalk ». Un complément de filtrage, permettant la bonne réception des sous-bandes optiques, peut alors être mis en oeuvre au niveau des composants RF utilisés dans récepteur optique tels qu'une photodiode, un amplificateur RF, voire un filtre RF passe-bas.

Dans le cas où une seule sous-bande est extraite, un seul récepteur optique peut être utilisé. Inversement, si l'ensemble des sous-bandes optiques du signal S sont extraites, n récepteurs optiques peuvent être utilisés. Dans un autre mode de réalisation avantageux où un récepteur optique de type détecteur cohérent est utilisé pour détecter une pluralité de sous-bandes optiques, il est possible d'effectuer le démultiplexage dans le domaine numérique, auquel cas il est avantageux de disposer en entrée de ce détecteur cohérent un convertisseur numérique-analogique présentant une bande passante et une vitesse d'échantillonnage appropriées.

Le port d'insertion e_{A} du dispositif d'insertion/extraction 10 est, pour sa part, connecté à la sortie d'un module d'émission optique 29, afin que ce module 29 puisse fournir la ou les sous-bande(s) optique(s) à insérer au dispositif d'insertion/extraction 10.

Ce module d'émission optique 29 peut être composé d'une pluralité d'émetteurs optiques, émettant chacun une sous-bande optique à insérer, connectées à un multiplexeur qui rassemble les sous-bandes optiques émises au sein d'un même signal optique d'insertion, à destination du port d'insertion e_{A} du dispositif d'insertion/extraction 10. Les modules de réception optique 28 et d'émission optique 29 peuvent être rassemblés au sein d'un même émetteur/récepteur optique ou être constitués par des modules séparés physiquement comme illustré sur la figure 3.

Le port de sortie principal s_{λ}, du dispositif d'insertion/extraction 10 est connecté pour sa part à un deuxième port d'entrée de moyens de substitution 25, afin d'y transmettre le canal optique modifié C₁' dans lequel les sous-bandes optiques extraites sur le port d'extraction s_{D} du dispositif 10 ont été remplacées par les sous-bandes optiques de remplacement insérées sur le port d'insertion e_{A} du dispositif 10.

Le commutateur optique 20 comprend ainsi des moyens de substitution 25, connectés au dispositif d'insertion/extraction 10, qui servent à obtenir un signal optique modifié S' par remplacement du canal optique sélectionné C₁ par le canal optique modifié C₁' obtenu par le dispositif d'insertion/extraction 10. Ces moyens de substitution 25 reçoivent donc, d'une part, le signal optique S initial par le biais d'un premier port d'entrée et, d'autre part, le canal optique modifié C₁' par le biais du deuxième port d'entrée.

Dans un mode de réalisation avantageux, le commutateur optique d'insertion/extraction 20 comprend avantageusement un moyen de duplication 21 permettant de dupliquer le signal optique S sur au moins un premier et un deuxième ports de sortie, le premier port de sortie étant connecté au module de sélection 23 pour lui fournir un premier signal optique dupliqué S(1) et le deuxième port de sortie étant connecté aux moyens de substitution 25 pour leur fournir un deuxième signal optique dupliqué S(2).

Dans ce mode de réalisation, les moyens de substitution 25 peuvent avantageusement comprendre un module de blocage de longueur d'ondes 26 (WB pour «Wavelength Blocker» en anglais), connecté au premier port d'entrée des moyens de substitution 25, ainsi qu'un moyen de couplage 27 dont un port d'entrée est connecté à la sortie du module de blocage 26 tandis que l'autre port d'entrée est connecté au deuxième port d'entrée des moyens de substitution 25.

Ainsi, le module de blocage 26 reçoit le signal optique initial S et supprime, dans ce signal optique S, le canal optique C₁ qui est sélectionné par le module de sélection 23. Il délivre ainsi, en sortie et à destination du moyen de couplage 27, un signal optique modifié comprenant tous les canaux optiques du signal S à l'exception du canal optique C₁.

Dans un mode particulier de réalisation, le module de blocage 26 est reconfigurable à distance par l'intermédiaire du module de gestion de commutateur décrit précédemment, lequel peut instruire au module de blocage 26 de supprimer le canal optique sélectionné par ailleurs par le module de sélection 23 afin de procéder au remplacement de ce canal optique C₁ dans le signal optique S.

Le moyen de couplage 27 reçoit ainsi le signal optique modifié S*, correspondant au signal optique S sans le canal optique C₁, ainsi que le canal optique modifié C₁' et les rassemble au sein d'un même signal optique de sortie S', composé des canaux optiques C₁', C₂ et C₃ multiplexés en longueurs d'onde.

Le signal optique de sortie S' obtenu avec le commutateur optique 20 correspond ainsi au signal optique S d'entrée dans lequel au moins une des sous-bandes optiques composant l'un des canaux optiques du signal S a été extraite et remplacée.

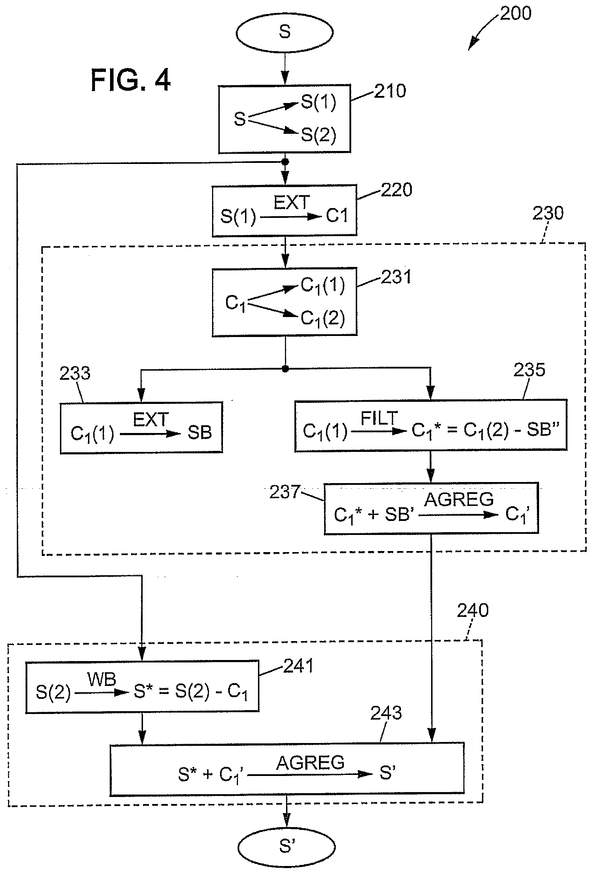

On se réfère maintenant à la **figure 4** sur laquelle sont illustrées les étapes d'un procédé 200 d'insertion/extraction d'une ou plusieurs sous-bande(s) optique(s) dans un signal optique composé d'une pluralité de canaux optiques selon la présente invention, ces étapes pouvant être avantageusement effectuées au moyen du commutateur optique de la figure 3.

Ici, le procédé 200 d'insertion/extraction s'applique à l'extraction et/ou au remplacement d'une sous-bande optique dans un canal optique C₁ comportant une pluralité de sous-bandes optique, multiplexées par exemple en fréquence selon la technique OFDM, ce signal optique C₁ étant multiplexé en longueur d'onde avec d'autres canaux optiques similaires, comportant éventuellement également une pluralité de sous-bandes optiques multiplexées par exemple selon la technique OFDM, au sein d'un signal optique S.

Le procédé 200 d'insertion/extraction comprend, d'une part, l'extraction 220 du canal optique C₁, dans lequel se trouve la sous-bande optique à extraire et/ou remplacer, à partir du signal optique S ou d'une copie de ce signal optique S. Cette étape de sélection 220 peut être effectuée à l'aide de moyens similaires au module de sélection 23 décrit précédemment.

Une fois extrait le canal optique C₁ contenant la sous-bande optique à extraire et/ou remplacer, on se retrouve dans le contexte du procédé 100 d'insertion/extraction illustré à la figure 2.

Le procédé 200 comprend donc alors une étape 230 d'application du procédé 100 d'insertion/extraction tel que décrit précédemment au canal optique extrait C₁, afin d'extraire au moins une première sous-bande optique de ce canal optique extrait et/ou d'obtenir au moins un canal optique modifié C₁', à partir de ce canal optique extrait dans lequel au moins une sous-bande optique de remplacement est insérée à la place d'au moins une deuxième sous-bande optique à supprimer.

Ainsi, cette étape 230 de remplacement comprend :
- une première sous-étape 231 de duplication du canal optique Cᵢ en une pluralité de canaux optique dupliqués C₁(1) et C₁(2), similairement à l'étape 101 précédemment décrite ;
- éventuellement une sous-étape 233 d'extraction, à partir d'au moins un des canaux optiques dupliqués, en l'occurrence C₁(1) dans la figure 4, de la sous-bande optique à extraire et/ou remplacer, similairement à l'étape 103 précédemment décrite, si l'on désire extraire cette sous-bande pour recevoir les données qu'elle contient ;
- une sous-étape 235 d'obtention, à partir d'un autre des canaux optiques dupliqués différent du canal optique dupliqué utilisé pour l'extraction 113 (en l'occurrence C₁(2) sur la figure 4), d'un canal optique filtré C₁* dans lequel la sous-bande optique à remplacer est supprimée, similairement à l'étape 105 précédemment décrite ; et
- une fois le canal optique filtré C₁* obtenu, une sous-étape 237 d'insertion d'une sous-bande optique de remplacement SB' dans le canal optique filtré C₁*, afin d'obtenir un canal optique modifié C₁'.

Une fois cette opération de remplacement effectuée et le canal optique modifié Cᵢ' obtenu, une étape 240 d'obtention d'un signal optique modifié S' est effectuée, durant laquelle le signal optique modifié S' est obtenue en remplaçant, dans le signal optique S ou une copie de celui-ci, le canal optique extrait C₁ par le canal optique modifié C₁'.

Dans un mode de réalisation avantageux, le procédé 200 d'insertion/extraction comprend une étape 210 de duplication préalable du signal optique S en au moins un premier et un deuxième signaux optiques dupliqués S(1) et S(2). Dans ce cas, l'extraction 220 du canal optique C₁ est effectué en utilisant le premier signal optique dupliqué S(1) et l'obtention 240 du signal optique modifié S' utilise le deuxième signal optique dupliqué S(2).

Dans ce mode de réalisation, l'étape 240 du signal optique modifié peut comprendre une première sous-étape 241 d'obtention d'un signal optique filtré S*, à partir du deuxième signal optique dupliqué S(2) dans lequel le canal optique extrait C₁ est supprimé.

L'étape 240 du signal optique modifié comprend alors également une deuxième sous-étape 243 d'agrégation 243 du signal optique filtré S* avec le canal optique modifié C₁' obtenu lors de la sous-étape d'insertion 237, afin d'obtenir le signal optique modifié S' dans lequel une sous-bande optique a bien été remplacée par une sous-bande de remplacement.

Le procédé d'insertion/extraction 200 permet ainsi l'extraction et/ou le remplacement d'une ou plusieurs sous-bande(s) optique(s) située(s) dans un canal optique multiplexé en longueur d'onde avec d'autres canaux optiques au sein d'un signal optique, par exemple de type WDM.

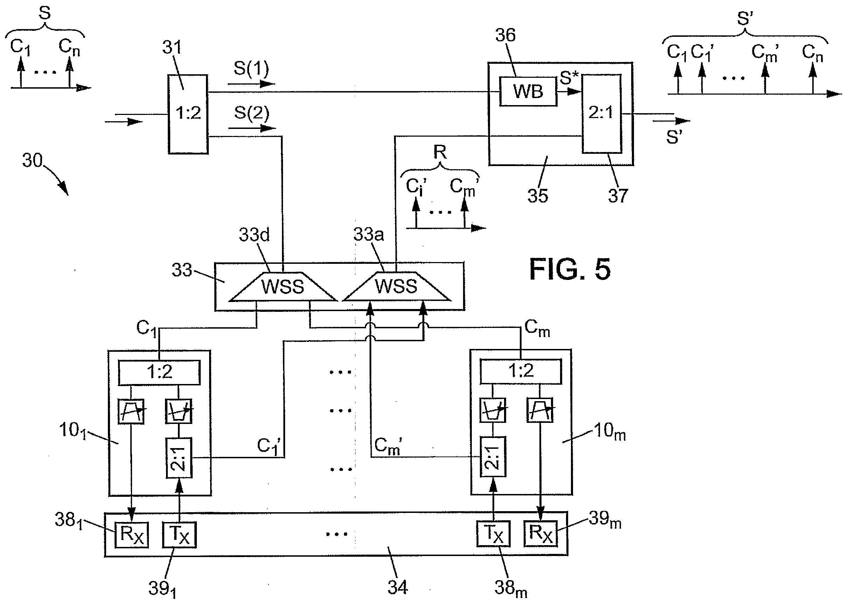

On se réfère maintenant à la **figure 5** sur laquelle est illustré un commutateur optique 30 utilisant le dispositif d'insertion/extraction 10 illustré sur la figure 1 selon un mode avantageux de réalisation de l'invention.

Le commutateur optique 30 est composé de façon similaire au commutateur optique 20, en ce sens qu'il comprend un moyen de duplication 31 similaire au moyen de duplication 21 et des moyens de substitution similaires 35 similaires aux moyens de substitution 25.

Le commutateur optique 30 comporte également un module de sélection 33 connecté à l'un des ports de duplication des moyens de duplication 31, afin de recevoir un signal optique S composé de n canaux optiques C₁,...,Cₙ multiplexés en longueurs d'onde.

Ce module de sélection 33 se distingue cependant du module de sélection 23 en ce qu'il comporte une unité 33d de désagrégation des canaux optiques présentant un nombre m de ports de sortie (où 2≤m≤n) sur lesquels sont respectivement envoyés un des canaux optiques C₁,..., Cₙ comprenant au moins une sous-bande optique à extraire et/ou remplacer. Une telle unité de désagrégation 33d peut consister en un démultiplexeur WDM, par exemple.

Chaque port de sortie de l'unité 33d de désagrégation des canaux optiques est connecté respectivement au port d'entrée principal d'un dispositif d'insertion/extraction associé au canal optique fourni sur ce port de sortie, de sorte que l'unité 33d de désagrégation soit connectée à m dispositifs d'insertion/extraction 10₁,...,10ₘ. Par commodité, seuls le premier dispositif 10₁ et le dernier dispositif 10ₘ sont représentés sur la figure 5.

Chacun des dispositifs d'insertion/extraction 10i (où 1≤i≤m) est connecté à un module de réception optique 38ᵢ par son port d'extraction s_{D}, ainsi qu'à un module d'émission optique 39ᵢ par son port d'insertion, similairement à ce qui est décrit sur la figure 3. Les différentes paires de modules de réception 38i et d'émission 39i peuvent être rassemblées au sein d'une unité d'émission/réception optique 34, afin de mutualiser la gestion des ressources en alimentation électrique des composantes optoélectroniques constituant ces différents modules.

Le module de sélection 33 se distingue également en ce qu'il comporte une unité 33a d'agrégation des canaux optiques présentant un nombre m de ports d'entrée. Chacun de ces m ports d'entrée est connecté respectivement au port de sortie principal d'un des dispositifs d'insertion/extraction 10₁,...,10ₘ, de sorte que l'unité 33a d'agrégation reçoit une pluralité de signaux modifiés C₁',...,Cₘ' issus de m canaux optiques sélectionnés parmi les canaux C₁-Cₙ et traités respectivement par les dispositifs d'insertion/extraction 10₁,...,10ₘ.

Cette unité 33a d'agrégation va agréger les canaux optiques modifiés C1',...,Cm' au sein d'un même signal optique de canaux agrégé et transmettre ce signal optique agrégé R au deuxième port d'entrée des moyens de substitution 35.

Similairement à ce qui est fait dans la figure 3, le module de blocage 36 des moyens de substitution 35 reçoit un des signaux optiques dupliqués, S(1) en l'occurrence et supprime, dans ce signal optique S(1), les canaux optiques sélectionnés par l'unité de désagrégation 33d du module de sélection 33. Ce module de blocage 36 délivre ainsi, en sortie et à destination du moyen de couplage 37, un signal optique filtré S* comprenant tous les canaux optiques du signal optique d'entrée S à l'exception des canaux optiques sélectionnés.

Le moyen de couplage 37 reçoit ainsi le signal optique filtré S*, correspondant au signal optique d'entrée S sans les canaux optiques sélectionnés, sur son premier port d'entrée, ainsi qu'un signal optique agrégé R dans lequel les canaux optiques modifiés C1'-Cm' sont agrégés, sur son deuxième port d'entrée, et les couple afin de fournir un signal optique modifié S' composé de n canaux optiques multiplexés en longueurs d'onde incluant les m canaux optiques modifiés C1'-Cm'.

Le signal optique de sortie S' obtenu avec le commutateur optique 30, correspond ainsi au signal optique S d'entrée dans lequel des sous-bandes optiques appartenant à plusieurs des canaux optiques du signal S ont été extraites et/ou remplacées.

Avec ce commutateur optique 30, il est ainsi possible d'extraire et/ou remplacer des sous-bandes optiques appartenant à différents canaux multiplexés en longueur d'onde au sein d'un même signal optique.

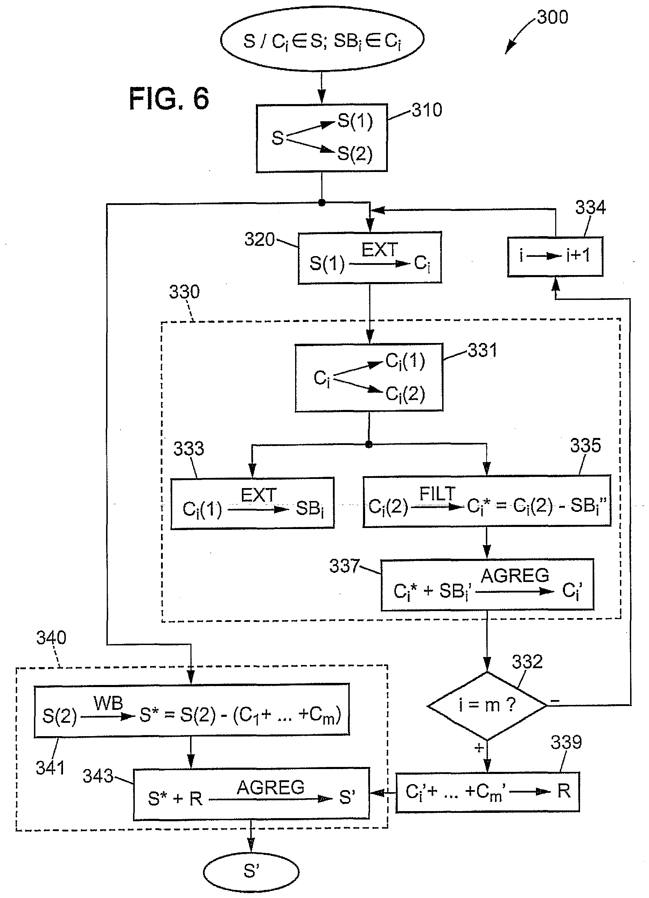

On se réfère maintenant à la **figure 6** sur laquelle sont illustrées les étapes d'un procédé 300 d'insertion/extraction de sous-bandes optiques appartenant à une pluralité de canaux optiques multiplexés au sein d'un signal optique S selon la présente invention, ces étapes pouvant être avantageusement effectuées au moyen du commutateur optique 30 de la figure 5.

Ce procédé 300 d'insertion/extraction correspond pour l'essentiel au procédé 200 d'insertion/extraction décrit précédemment et dont les étapes sont illustrées sur la figure 4. Il s'en distingue cependant par une boucle supplémentaire d'itération permettant d'extraire une ou plusieurs sous-bande(s) au sein d'une pluralité de canaux optiques alors que le procédé 200 de remplacement concernait le traitement d'un seul canal optique.

Le procédé 300 d'insertion/extraction comprend donc une première étape 310 de duplication du signal optique S en une pluralité de signaux optiques dupliqués, S(1) et S(2) en l'occurrence, similairement à l'étape 210 décrite précédemment.

Une fois la pluralité de signaux optiques dupliqués obtenue, le procédé 300 comprend successivement, pour un nombre m de canaux optiques à traiter, avec une variable i allant de 1 à m :
- la sélection (étape 320) d'un premier canal optique Cᵢ, dans lequel se trouve une (ou plusieurs) sous-bande optique SBᵢ à extraire et/ou remplacer, à partir d'un premier des signaux optiques dupliqués S(1), similairement à l'étape 220 décrite précédemment.
- l'application (étape 330) du procédé d'insertion/extraction 100 tel que décrit précédemment à la sous-bande optique SBᵢ, dans le canal optique sélectionné Cᵢ, correspondant à l'étape 230 de remplacement précédemment décrite et comprenant les sous-étapes suivantes :
   - une première sous-étape 331 de duplication du canal optique Cᵢ en une pluralité de canaux optiques dupliqués Cᵢ(1) et Cᵢ(2), similairement à l'étape 231 précédemment décrite ;
   - éventuellement une sous-étape 333 d'extraction, à partir d'au moins un des canaux optiques dupliqués, en l'occurrence Cᵢ(1) dans la figure 6, de la sous-bande optique SBᵢ à extraire et/ou remplacer, similairement à l'étape 233 précédemment décrite, si l'on désire extraire cette sous-bande pour recevoir les données qu'elle contient ;
   - une sous-étape 335 d'obtention, à partir d'un autre des canaux optiques dupliqués différent du canal optique dupliqué utilisé pour l'extraction 113 (en l'occurrence Cᵢ (2) sur la figure 6), d'un canal optique filtré Cᵢ* dans lequel la sous-bande optique SBᵢ à remplacer est supprimée, similairement à l'étape 235 précédemment décrite ; et
   - une fois le canal optique filtré Cᵢ* obtenu, une sous-étape 337 d'insertion d'une sous-bande optique de remplacement SBᵢ' dans le canal optique filtré Cᵢ*, afin d'obtenir un canal optique modifié Cᵢ', similairement à l'étape 237 précédemment décrite.

Une fois cette opération de remplacement 330 effectuée pour un canal optique modifié Cᵢ' obtenu, les étapes 320 de sélection et 330 de remplacement sont à nouveau effectuées pour chaque canal optique Cᵢ contenant une (ou plusieurs) sous-bande(s) optique(s) à extraire et/ou remplacer.

Une fois les m canaux optiques modifiés C₁*,..., Cᵢ*,..., Cₘ* obtenus, ceux-ci sont agrégés au sein d'un même signal optique agrégé R au cours d'une étape d'agrégation 339.

Le procédé 300 de remplacement comprend alors une étape 340 d'obtention d'un signal optique modifié S' comprenant une première sous-étape 341 d'obtention d'un signal optique filtré S*, à partir d'un deuxième signal optique dupliqué S(2), similairement à l'étape 241 décrite précédemment, dans lequel les canaux optiques C₁..... Cₘ sélectionnés comprenant les sous-bandes optiques SBᵢ à extraire et/ou remplacer sont supprimés.

L'étape 340 d'obtention d'un signal optique modifié comprend également une deuxième sous-étape 343 d'agrégation du signal optique filtré S*, obtenu lors de la sous-étape 341, avec le signal optique agrégé R, obtenu lors de l'étape d'agrégation 339, afin d'obtenir un signal optique modifié S' dans lequel les sous-bandes optiques SBᵢ ont bien été remplacées par des sous-bandes optiques SBᵢ'.

Le procédé d'insertion/extraction 300 permet ainsi l'extraction et/ou le remplacement de plusieurs sous-bandes optiques situées dans différents canaux optiques multiplexés en longueurs d'onde avec d'autres canaux optiques au sein d'un même signal optique.

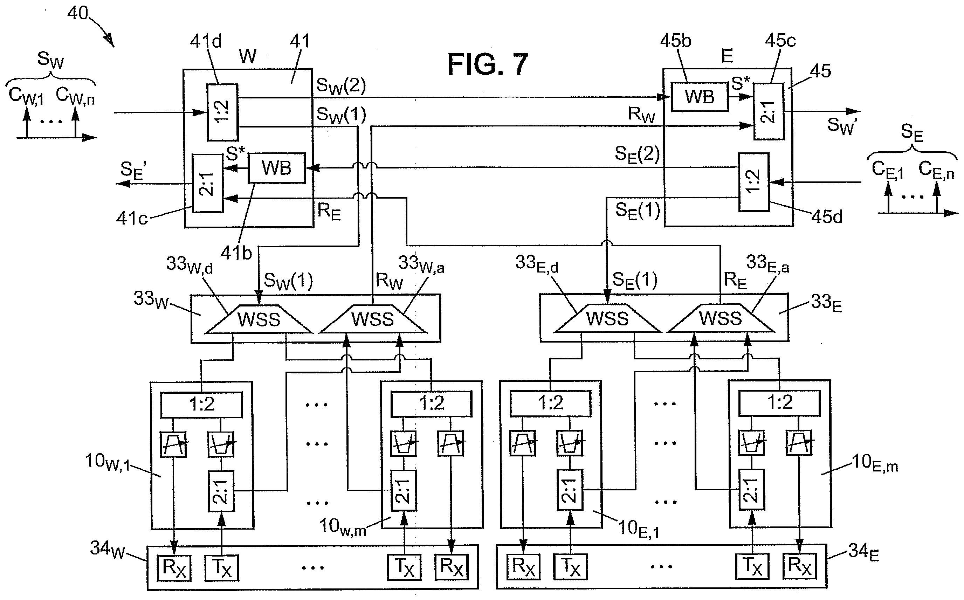

On se réfère maintenant à la **figure 7** sur laquelle est illustré un commutateur optique 40 utilisant le dispositif d'insertion/extraction 10 illustré sur la figure 1 selon un autre mode avantageux de réalisation de l'invention.

Ce commutateur optique 40 correspond à une implémentation bidirectionnelle du commutateur optique 30 illustré à la figure 5.

Pour ce faire, le commutateur optique comprend des moyens de réarrangement 41 et 45 associés respectivement à un des deux sens de transmission possibles.

Les premiers moyens de réarrangement 41 présentent les fonctions du moyen de duplication 31 selon la figure 5 pour un signal optique S_{W} transitant dans la direction Ouest-Est ainsi que les fonctions des moyens de substitution 35 selon la figure 5 pour un signal optique S_{E} transitant dans la direction Est-Ouest.

Les premiers moyens de réarrangement 41 comprennent donc un moyen de duplication 41d pour dupliquer le signal optique S_{W} en entrée, similaire au moyen de duplication 31. Les premiers moyens de réarrangement 41 comprennent également un module de blocage 41b bloquant certains canaux optiques sélectionnés dans le signal optique S_{E}, similaire au module de blocage 36 de la figure 5. Les premiers moyens de réarrangement 41 comprennent enfin un moyen de couplage 41c agrégeant un signal optique S_{E}* filtré par le module de blocage 36 avec un signal optique modifié R_{E} composé des canaux optiques sélectionnés dans le signal optique S_{E} pour lesquels des sous-bandes optiques sont extraites et/ou remplacées.

De façon symétrique, les deuxièmes moyens de réarrangement 45 présentent les fonctions du moyen de duplication 31 selon la figure 5 pour un signal optique S_{E} transitant dans la direction Est-Ouest ainsi que les fonctions des moyens de substitution 35 selon la figure 5 pour un signal optique S_{W} transitant dans la direction Ouest-Est.

Ces deuxièmes moyens de réarrangement 45 comprennent donc un moyen de duplication 45d pour dupliquer le signal optique S_{E} en entrée, similaire au moyen de duplication 31 de la figure 5. Les deuxièmes moyens de réarrangement 45 comprennent également un module de blocage 45b bloquant certains canaux optiques sélectionnés dans le signal optique S_{W}, similaire au module de blocage 36 de la figure 5. Les deuxièmes moyens de réarrangement 45 comprennent enfin un moyen de couplage 45c agrégeant un signal optique S_{W}* filtré par le module de blocage 36 avec un signal optique modifié R_{W} composé des canaux optiques sélectionnés dans le signal optique S_{W} pour lesquels des sous-bandes optiques sont extraites et/ou remplacées.

En ce qui concerne la direction Ouest-Est, le commutateur optique 40 comprend un module de sélection 33_{W}, similaire au module de sélection 33 de la figure 5, qui comporte une unité de désagrégation de canaux optiques similaire à l'unité de désagrégation 33d de la figure 5, dont le port d'entrée est connecté à l'un des deux ports de sortie du moyen de duplication 41d afin de recevoir le signal optique dupliqué S_{W}(1) et qui présente un nombre m' de ports de sortie.

Chaque port de sortie de cette unité de désagrégation est connecté respectivement au port d'entrée principal d'un dispositif d'insertion/extraction associé au canal optique fourni sur ce port de sortie, de sorte que cette unité de désagrégation est connectée à m' dispositifs d'insertion/extraction 10_{W,1},...,10_{W,m'} similaires au dispositif d'insertion/extraction 10. Par commodité, seuls le premier dispositif 10_{W,1} et le dernier dispositif 10_{W,m'}, parmi ces m' dispositifs, sont représentés sur la figure 7.

Chacun des m' dispositifs d'insertion/extraction 10_{W,1}-10_{W,m'} connectés à l'un des ports de sortie de l'unité de désagrégation est connecté à un module de réception optique par son port d'extraction s_{D}, ainsi qu'à un module d'émission optique par son port d'insertion, similairement à ce qui est décrit sur la figure 5. Les différentes paires de modules de réception et d'émission peuvent être rassemblées au sein d'une unité d'émission/réception optique 34_{W}, similairement à la figure 5.

Le module de sélection 33_{W} comporte également une unité d'agrégation 33_{W,a} de canaux optiques, similaire à l'unité d'agrégation 33a de la figure 5, qui présente un nombre m' de ports d'entrée. Chacun de ces m' ports d'entrée est connecté respectivement au port de sortie principal s_{λ} d'un des dispositifs d'insertion/extraction 10_{W,i} de sorte que l'unité 33_{W,a} d'agrégation reçoit une pluralité de canaux optiques modifiés C_{W,1}',...,C_{W,m'}' issus de m' canaux optiques sélectionnés parmi les canaux C_{W,1},...,C_{W,n} du signal S_{W} et traités respectivement par les dispositifs d'insertion/extraction 10_{W,i}.

Cette unité 33_{W,a} d'agrégation va rassembler les canaux optiques modifiés C_{W,1}',...,C_{W,m'}' au sein d'un même signal optique R_{W} de canaux modifiés et transmettre ce signal agrégé R_{W} au deuxième port d'entrée du moyen de couplage 45c appartenant aux moyens de réarrangement 45.

Le signal optique de sortie S_{W}', obtenu en sortie du moyen de couplage 45 par agrégation du signal optique S_{W} filtré par le module de blocage 45b avec le signal agrégé R_{W}, correspond ainsi au signal optique S_{W} dans lequel des sous-bandes optiques appartenant à plusieurs des canaux optiques du signal S_{W} ont été extraites et/ou remplacées.

De façon symétrique, en ce qui concerne la direction Est-Ouest, le commutateur optique 40 comprend un module de sélection 33_{E}, similaire au module de sélection 33 de la figure 5, qui comporte une unité de désagrégation 33_{E,d} de canaux optiques similaire à l'unité de désagrégation 33d de la figure 5, dont le port d'entrée est connecté à l'un des deux ports de sortie du moyen de duplication 45d, afin de recevoir le signal optique S_{E}, et qui présente un nombre m' de ports de sortie.

Chaque port de sortie de cette unité de désagrégation 33_{E,d} est connecté respectivement au port d'entrée principal e_{λ} d'un dispositif d'insertion/extraction 10_{E,i} associé au canal optique C_{E,i} fourni sur ce port de sortie, de sorte que cette unité de désagrégation est connectée à m' dispositifs d'insertion/extraction 10_{E.1},...,10_{E,m'} similaires au dispositif d'insertion/extraction 10. Toujours par commodité, seul le premier dispositif 10_{E,1} et le dernier dispositif 10_{E,m'}, parmi ces m' dispositifs, sont représentés sur la figure 7.

Chacun des m' dispositifs d'insertion/extraction 10_{E,1}-10_{E,m'} connectés à l'un des ports de sortie de l'unité de désagrégation 33_{E,d} est connecté à un module de réception optique par son port d'extraction s_{D}, ainsi qu'à un module d'émission optique par son port d'insertion, similairement à ce qui est décrit sur la figure 5. Les différents couples de modules de réception et d'émission peuvent être rassemblés au sein d'une unité d'émission/réception optique 34_{E}, similairement à la figure 4.

Le module de sélection 33_{E} comporte également une unité d'agrégation 33_{E,n} de canaux optiques, similaire à l'unité d'agrégation 33a de la figure 4, qui présente un nombre m' de ports d'entrée. Chacun de ces m ports d'entrée est connecté respectivement au port de sortie principal s_{λ} d'un des dispositifs d'insertion/extraction 10_{E,i} de sorte que l'unité d'agrégation 33_{E,a} reçoit une pluralité de canaux optiques modifiés C_{E,1}',...,C_{E,m'}' issus de m' canaux optiques sélectionnés parmi les canaux C_{E,1},...,C_{E,n} du signal S_{E} et traités respectivement par les dispositifs d'insertion/extraction 10_{E,i}.

Cette unité d'agrégation 33_{E,n} va rassembler les canaux optiques modifiés C_{E,1}',...,C_{E,m'}' au sein d'un même signal optique R_{E} de canaux modifiés et transmettre ce signal agrégé R_{E} au deuxième port d'entrée du moyen de couplage 41c appartenant aux deuxièmes moyens de réarrangement 45.

Le signal optique de sortie S_{E}', obtenu en sortie du moyen de couplage 41 par agrégation du signal optique S_{E}* filtré par le module de blocage 41b avec le signal agrégé R_{E}, correspond ainsi au signal optique S_{E} dans lequel des sous-bandes optiques appartenant à plusieurs des canaux optiques du signal S_{E} ont été extraites et/ou remplacées.

Le commutateur optique 40 est donc capable de traiter les signaux optiques multiplexés aussi bien dans la direction Est-Ouest que dans la direction Ouest-Est. Ce commutateur optique 40 est par conséquent insensible à la direction de transmission (on dit qu'il est « directionless » en anglais).

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

## Revendications

1. Dispositif d'insertion/extraction (10) d'au moins une sous-bande optique dans un canal optique (Cᵢ) composé d'une pluralité de sous-bandes optiques comprenant au moins deux signaux optiques multiplexés orthogonalement en fréquence, le dispositif comprenant :
- un moyen de duplication (11) apte à dupliquer le canal optique (Cᵢ) vers un premier port de duplication (s₁) et un deuxième port de duplication (s₂) :
- des moyens d'extraction (13) aptes à extraire une première sous-bande optique multiplexée (SB) appartenant au canal optique (Cᵢ), consistant en des moyens de filtrage passe-bande connectés au premier port de duplication (s₁) afin de recevoir un premier canal optique dupliqué (Cᵢ(1)) et arrangés pour laisser passer, vers un port d'extraction (s_{D}), la première sous-bande optique multiplexée (SB) du premier canal optique dupliqué ;
- des moyens de suppression (15) arrangés pour obtenir un canal optique filtré (Cᵢ*) à partir du canal optique (Cᵢ) dans lequel au moins une deuxième sous-bande multiplexée (SB") est supprimée, consistant en des moyens de filtrage coupe-bande connectés au deuxième port de duplication (s₂) afin de recevoir un deuxième canal optique dupliqué (Cᵢ(2)) et arrangés pour filtrer la deuxième sous-bande (SB") dans ledit deuxième canal optique dupliqué afin d'obtenir le canal optique filtré (Cᵢ*) ;
- un moyen de couplage (17) apte à insérer une sous-bande optique de remplacement (SB') à la place de la deuxième sous-bande multiplexée (SB") dans le canal optique filtré (Cᵢ*) afin d'obtenir un canal optique modifié (Cᵢ')
dans lequel la largeur de la bande spectrale passante des moyens de filtrage passe-bande et/ ou de la bande spectrale rejetée par les moyens de filtrage coupe-bande est comprise dans une bande de fréquence allant de 7 GHz à 10 GHz.

2. Dispositif d'insertion/extraction (10) selon la revendication 1, **caractérisé en ce que** la largeur de la bande spectrale passante des moyens de filtrage passe-bande (13) et/ou de la bande spectrale rejetée par les moyens de filtrage coupe-bande (15) est ajustable.

3. Dispositif d'insertion/extraction (10) selon l'une des revendications 1 à 2, **caractérisé en ce que** la fréquence centrale de la bande spectrale passante des moyens de filtrage passe-bande (13) et/ ou de la bande spectrale rejetée par les moyens de filtrage coupe-bande (15) est accordable.

4. Dispositif d'insertion/extraction (10) selon l'une des revendications 1 à 3, **caractérisé en ce que** les sous-bandes optiques multiplexées du canal optique (Cᵢ) comprennent au moins deux signaux optiques multiplexés orthogonalement en fréquence.

5. Dispositif d'insertion/extraction (10) selon l'une des revendications 1 à 4, **caractérisé en ce qu'**il comprend un module de gestion de dispositif, connecté aux moyens de filtrage passe-bande (13) et aux moyens de filtrage coupe-bande (15), ledit module de gestion de dispositif étant arrangé pour ajuster la bande spectrale passante des moyens de filtrage passe-bande (13) et la bande spectrale rejetée par les moyens de filtrage coupe-bande (15) et pour accorder la fréquence centrale de la bande spectrale passante des moyens de filtrage passe-bande (13) et de la bande spectrale rejetée par les moyens de filtrage coupe-bande (15).

6. Commutateur optique d'insertion/extraction (20) d'au moins une sous-bande optique multiplexée appartenant à au moins un canal optique (C₁) composé d'une pluralité de sous-bandes optiques comprenant au moins deux signaux optiques multiplexés orthogonalement en fréquence, compris dans un signal optique (S) comportant une pluralité de canaux optiques multiplexés en longueur d'onde, ledit commutateur optique comprenant :
- un module de sélection (23) apte à sélectionner au moins un canal optique (C₁) comprenant au moins une sous-bande optique multiplexée à extraire et/ou à remplacer parmi les canaux optiques multiplexés du signal optique (S) ;
- au moins un dispositif d'insertion/extraction (10) selon l'une des revendications 1 à 5, connecté au module de sélection (23) et arrangé pour extraire au moins une première sous-bande optique multiplexée du canal optique sélectionné (C₁) et/ou fournir un canal optique modifié (C₁') obtenu à partir du canal optique sélectionné dans lequel au moins une sous-bande optique multiplexée de remplacement est insérée ;
- des moyens de substitution (25), connectés au dispositif d'insertion/extraction (10) et arrangés pour obtenir un signal optique modifié (S') par remplacement du au moins un canal optique sélectionné (C₁) par le au moins un canal optique modifié (C₁').

7. Commutateur optique d'insertion/extraction (20) selon la revendication 6, **caractérisé en ce qu'**il comprend en outre un moyen de duplication (21) arrangé pour dupliquer le signal optique (S) sur au moins un premier et un deuxième ports de sortie, le premier port de sortie étant connecté au module de sélection (23) pour lui fournir un premier signal optique dupliqué (S(1)) et le deuxième port de sortie étant connecté aux moyens de substitution (25) pour leur fournir un deuxième signal optique dupliqué, et **en ce que** les moyens de substitution (25) comprennent :
- un module de blocage (26) arrangé pour recevoir le deuxième signal optique dupliqué (S(2)) et pour fournir en sortie un signal optique filtré (S*) dans lequel le au moins un canal optique sélectionné (C₁) est supprimé ;
- un moyen de couplage (27) arrangé pour coupler le signal optique filtré (S*) et le au moins un canal optique modifié (C₁') afin d'obtenir le signal optique modifié (S').

8. Commutateur optique d'insertion/extraction (30) selon la revendication 7, **caractérisé en ce qu'**il comprend un module de gestion de commutateur connecté au module de sélection (23) et au module de blocage (26), ledit module de gestion de commutateur étant arrangé pour commander le module de sélection (23) et le module de blocage (26) afin de respectivement sélectionner et supprimer le au moins un canal optique (C₁).

9. Commutateur optique d'insertion/extraction (30) selon l'une des revendications 6 à 8, dans lequel ledit commutateur comprend une pluralité de dispositifs d'insertion/extraction (10₁,10ₘ) selon l'une des revendications 1 à 5, **caractérisé en ce que** le module de sélection (33) comprend :
- une unité de désagrégation (33d) arrangée pour transmettre une pluralité de canaux optiques sélectionnés (C₁,Cₘ), comportant chacun au moins une sous-bande optique multiplexée à extraire et/ou remplacer, respectivement vers chacun des dispositifs d'insertion/extraction (10₁,10ₘ) ;
- une unité d'agrégation (33a) arrangée pour agréger les canaux optiques modifiés (C₁',Cₘ') obtenus respectivement par chacun des dispositifs d'insertion/extraction (10₁,10ₘ) dans un signal optique agrégé (R) transmis aux moyens de substitution (35).

10. Procédé d'insertion/extraction (100) d'au moins une sous-bande optique dans un canal optique (Cᵢ) comportant une pluralité de sous-bandes optiques comprenant au moins deux signaux optiques multiplexés orthogonalement en fréquence, ledit procédé comprenant :
- la duplication (101) du canal optique (Cᵢ) en une pluralité de canaux optiques dupliqués :
- l'extraction (103) d'au moins une première sous-bande optique multiplexée (SB) dans l'un des canaux optiques dupliqués (Cᵢ) par des moyens de filtrage passe-bande arrangés pour laisser passer la première sous-bande optique multiplexée (SB) du canal optique dupliqué ;
- l'obtention (105) d'un canal optique filtré (Cᵢ*) à partir d'un des canaux optiques dupliqués (Cᵢ) dans lequel au moins une deuxième sous-bande optique multiplexée est supprimée par des moyens de filtrage coupe-bande arrangés pour filtrer la deuxième sous-bande multiplexée (SB") dans ledit canal optique dupliqué afin d'obtenir le canal optique filtré (Cᵢ*) ; et
- l'insertion (107) d'au moins une sous- bande optique multiplexée de remplacement (SB') dans le canal optique filtré, en remplacement de la deuxième sous-bande optique multiplexée, afin d'obtenir un canal optique modifié (Cᵢ').
dans lequel la largeur de la bande spectrale passante des moyens de filtrage passe-bande et/ ou de la bande spectrale rejetée par les moyens de filtrage coupe-bande est comprise dans une bande de fréquence allant de 7 GHz à 10 GHz.

11. Procédé d'insertion/extraction (200) d'au moins une sous-bande optique dans un signal optique (S) comprenant une pluralité de canaux optiques (C₁,C₂,C₃) multiplexés en longueurs d'onde, au moins un desdits canaux optiques comprenant une pluralité de sous-bandes optiques comprenant au moins deux signaux optiques multiplexés orthogonalement en fréquence, ledit procédé comprenant :
- l'extraction (220) d'au moins un desdits canaux optique (C₁) comprenant au moins une sous-bande optique multiplexée à extraire et/ou à remplacer ;
- l'application (230) du procédé d'insertion/extraction selon la revendication 10 au canal optique extrait, afin d'extraire au moins une première sous-bande optique multiplexée du canal optique extrait (C₁) et/ou d'obtenir au moins un canal optique modifié (C₁') à partir du canal optique extrait (C₁) dans lequel au moins une sous-bande optique multiplexée de remplacement est insérée à la place d'au moins une deuxième sous-bande optique ;
- l'obtention (240) d'un signal optique modifié (S') à partir du signal optique (S) dans lequel le canal optique extrait (C₁) est remplacé par le canal optique modifié (C₁').

12. Procédé d'insertion/extraction (200) selon la revendication 11, **caractérisé par** une duplication (210) préalable du signal optique (S) en au moins un premier et un deuxième signaux optiques dupliqués (S(1),S(2)), l'extraction (220) du canal optique (C₁) se faisant à partir du premier signal optique dupliqué (S(1)), et l'étape d'obtention (240) du signal optique modifié (S') comprenant :
- l'obtention (241) d'un signal optique filtré (S*) à partir du deuxième signal optique dupliqué (S(2)) dans lequel la deuxième sous-bande optique multiplexée est supprimée ;
- l'agrégation (243) du signal optique filtré (S*) avec le au moins un canal optique modifié (C_{1'}) afin d'obtenir le signal optique modifié.

13. Procédé d'insertion/extraction (300) selon la revendication 11, dans lequel une pluralité de sous-bandes optiques multiplexées comprises dans une pluralité de canaux optiques sélectionnés sont à extraire et/ou remplacer, **caractérisé en ce que** :
- l'application (330) du procédé d'insertion/extraction selon la revendication 11 est effectuée pour chacun desdits canaux optiques sélectionnés afin d'obtenir une pluralité de canaux optiques modifiés dans lesquels au moins une sous-bande optique multiplexée de remplacement est insérée ;
- la pluralité de canaux optiques modifiés est agrégée (339) en un signal optique agrégé (R) avant l'obtention (340) du signal optique modifié ;
- l'étape d'agrégation (343) comprend l'agrégation du signal optique filtré (S*) avec le signal optique agrégé (R) afin d'obtenir le signal optique modifié (S').

## Patentansprüche

1. Vorrichtung zum Einfügen/Extrahieren (10) mindestens eines optischen Teilbandes in einen optischen Kanal (Cᵢ), der aus einer Vielzahl von optischen Teilbändern besteht, die mindestens zwei orthogonal frequenzgemultiplexte optische Signale umfassen, wobei die Vorrichtung umfasst:
- ein Duplikationsmittel (11), das geeignet ist, den optischen Kanal (Cᵢ) zu einem ersten Duplikationsport (s₁) und einem zweiten Duplikationsport (s₂) zu duplizieren;
- Extraktionsmittel (13), die geeignet sind, ein erstes gemultiplextes optisches Teilband (SB), das dem optischen Kanal (Cᵢ) angehört, zu extrahieren, bestehend in Bandpassfiltermitteln, die mit dem ersten Duplikationsport (s₁) verbunden sind, um einen ersten duplizierten optischen Kanal (Cᵢ(1)) zu empfangen, und dazu eingerichtet sind, das erste gemultiplexte optische Teilband (SB) des ersten duplizierten optischen Kanals zu einem Extraktionsport (s_{D}) durchzulassen;
- Unterdrückungsmittel (15), die dazu eingerichtet sind, einen gefilterten optischen Kanal (Cᵢ*) ausgehend von dem optischen Kanal (Cᵢ) zu erhalten, in dem mindestens ein zweites gemultiplextes Teilband (SB") unterdrückt ist, bestehend in Bandsperrfiltermitteln, die mit dem zweiten Duplikationsport (s₂) verbunden sind, um einen zweiten duplizierten optischen Kanal (Cᵢ(2)) zu empfangen, und dazu eingerichtet sind, das zweite Teilband (SB") in dem zweiten duplizierten optischen Kanal zu filtern, um den gefilterten optischen Kanal (Cᵢ*) zu erhalten;
- ein Kopplungsmittel (17), das geeignet ist, ein optisches Ersatzteilband (SB') anstelle des zweiten gemultiplexten Teilbandes (SB") in den gefilterten optischen Kanal (Cᵢ*) einzufügen, um einen modifizierten optischen Kanal (Cᵢ') zu erhalten,
wobei die Breite des Durchlass-Spektralbandes der Bandpassfiltermittel und/oder des von den Bandsperrfiltermitteln abgewiesenen Spektralbandes in einem Frequenzband enthalten ist, das von 7 GHz bis 10 GHz reicht.

2. Vorrichtung zum Einfügen/Extrahieren (10) nach Anspruch 1, **dadurch gekennzeichnet, dass** die Breite des Durchlass-Spektralbandes der Bandpassfiltermittel (13) und/oder des von den Bandsperrfiltermitteln (15) abgewiesenen Spektralbandes anpassbar ist.

3. Vorrichtung zum Einfügen/Extrahieren (10) nach einem der Ansprüche 1 bis 2, **dadurch gekennzeichnet, dass** die Mittenfrequenz des Durchlass-Spektralbandes der Bandpassfiltermittel (13) und/oder des von den Bandsperrfiltermitteln (15) abgewiesenen Spektralbandes abstimmbar ist.

4. Vorrichtung zum Einfügen/Extrahieren (10) nach einem der Ansprüche 1 bis 3, **dadurch gekennzeichnet, dass** die gemultiplexten optischen Teilbänder des optischen Kanals (Cᵢ) mindestens zwei orthogonal frequenzgemultiplexte optische Signale umfassen.

5. Vorrichtung zum Einfügen/Extrahieren (10) nach einem der Ansprüche 1 bis 4, **dadurch gekennzeichnet, dass** sie ein Vorrichtungsverwaltungsmodul umfasst, das mit den Bandpassfiltermitteln (13) und den Bandsperrfiltermitteln (15) verbunden ist, wobei das Vorrichtungsverwaltungsmodul dazu eingerichtet ist, das Durchlass-Spektralband der Bandpassfiltermittel (13) und das von den Bandsperrfiltermitteln (15) abgewiesene Spektralband anzupassen und die Mittenfrequenz des Durchlass-Spektralbandes der Bandpassfiltermittel (13) und des von den Bandsperrfiltermitteln (15) abgewiesenen Spektralbandes abzustimmen.

6. Optischer Schalter zum Einfügen/Extrahieren (20) mindestens eines gemultiplexten optischen Teilbandes, das mindestens einem optischen Kanal (C₁) angehört, der aus einer Vielzahl von optischen Teilbändern besteht, die mindestens zwei orthogonal frequenzgemultiplexte optischen Signale umfassen und in einem optischen Signal (S) enthalten sind, das eine Vielzahl von wellenlängengemultiplexten optischen Kanälen beinhaltet, wobei der optische Schalter umfasst:
- ein Auswahlmodul (23), das geeignet ist, mindestens einen optischen Kanal (C₁), der mindestens ein zu extrahierendes und/oder zu ersetzendes gemultiplextes optisches Teilband umfasst, unter den gemultiplexten optischen Kanälen des optischen Signals (S) auszuwählen;
- mindestens eine Vorrichtung zum Einfügen/Extrahieren (10) nach einem der Ansprüche 1 bis 5, die mit dem Auswahlmodul (23) verbunden ist und dazu eingerichtet ist, mindestens ein erstes gemultiplextes optisches Teilband des ausgewählten optischen Kanals (C₁) zu extrahieren und/oder einen modifizierten optischen Kanal (C₁') zu liefern, der ausgehend von dem ausgewählten optischen Kanal erhalten wird, in den mindestens ein gemultiplextes optisches Ersatzteilband eingefügt ist;
- Substitutionsmittel (25), die mit der Vorrichtung zum Hinzufügen/Entnehmen (10) verbunden sind und dazu eingerichtet sind, ein modifiziertes optisches Signal (S') durch Ersetzen des mindestens einen ausgewählten optischen Kanals (C₁) durch den mindestens einen modifizierten optischen Kanal (C₁') zu erhalten.

7. Optischer Schalter zum Hinzufügen/Entnehmen (20) nach Anspruch 6, **dadurch gekennzeichnet, dass** er ferner ein Duplikationsmittel (21) umfasst, der dazu eingerichtet ist, das optische Signal (S) auf mindestens einen ersten und einen zweiten Ausgangsport zu duplizieren, wobei der erste Ausgangsport mit dem Auswahlmodul (23) verbunden ist, um ihm ein erstes dupliziertes optisches Signal
(S(1)) zu liefern, und der zweite Ausgangsport mit den Substitutionsmitteln (25) verbunden ist, um ihnen ein zweites dupliziertes optisches Signal zu liefern, und dass die Substitutionsmittel (25) umfassen:
- ein Blockiermodul (26), das dazu eingerichtet ist, das zweite duplizierte optische Signal (S(2)) zu empfangen und im Ausgang ein gefiltertes optisches Signal (S*) zu liefern, in dem der mindestens eine ausgewählte optische Kanal (C₁) unterdrückt ist;
- ein Kopplungsmittel (27), das dazu eingerichtet ist, das gefilterte optische Signal (S*) und den mindestens einen modifizierten optischen Kanal (C₁') zu koppeln, um das modifizierte optische Signal zu erhalten (S').

8. Optischer Schalter zum Einfügen/Extrahieren (30) nach Anspruch 7, **dadurch gekennzeichnet, dass** er ein Schalterverwaltungsmodul umfasst, das mit dem Auswahlmodul (23) und mit dem Blockiermodul (26) verbunden ist, wobei das Schalterverwaltungsmodul dazu eingerichtet ist, das Auswahlmodul (23) und das Blockiermodul (26) zu steuern, um den mindestens einen optischen Kanal (C₁) auszuwählen beziehungsweise zu unterdrücken.

9. Optischer Schalter zum Einfügen/Extrahieren (30) nach einem der Ansprüche 6 bis 8, wobei der Schalter eine Vielzahl von Vorrichtungen zum Einfügen/Extrahieren (10₁,10ₘ) nach einem der Ansprüche 1 bis 5 umfasst, **dadurch gekennzeichnet, dass** das Auswahlmodul (33) umfasst:
- eine Disaggregationseinheit (33d), die dazu eingerichtet ist, eine Vielzahl von ausgewählten optischen Kanälen (C₁,Cₘ), von denen jeder mindestens ein zu extrahierendes und/oder zu ersetzendes gemultiplextes optisches Teilband beinhaltet, jeweils zu jeder der Vorrichtungen zum Einfügen/Extrahieren (10₁,10ₘ) zu übertragen
- eine Aggregationseinheit (33a), die dazu eingerichtet ist, die modifizierten optischen Kanäle (C₁',Cₘ'), die jeweils von jeder der Vorrichtungen zum Einfügen/Extrahieren (10₁,10ₘ) erhalten werden, in ein aggregiertes optisches Signal (R) zu aggregieren, das zu den Substitutionsmitteln (35) übertragen wird.

10. Verfahren zum Einfügen/Extrahieren (100) mindestens eines optischen Teilbandes in einen optischen Kanal (Cᵢ), der eine Vielzahl von optischen Teilbändern beinhaltet, die mindestens zwei orthogonal frequenzgemultiplexte optische Signale umfassen, wobei das Verfahren umfasst:
- das Duplizieren (101) des optischen Kanals (Cᵢ) in eine Vielzahl von duplizierten optischen Kanälen:
- das Extrahieren (103) mindestens eines ersten gemultiplexten optischen Teilbandes (SB) in einem der duplizierten optischen Kanäle (Cᵢ) mit Bandpassfiltermitteln, die dazu eingerichtet sind, das erste gemultiplexte optische Teilband (SB) des duplizierten optischen Kanals durchzulassen;
- das Erhalten (105) eines gefilterten optischen Kanals (Cᵢ*) ausgehend von einem der duplizierten optischen Kanäle (Cᵢ), in dem mindestens ein zweites gemultiplextes optisches Teilband mit Bandsperrfiltermitteln unterdrückt wird, die dazu eingerichtet sind, das zweite gemultiplexte Teilband (SB") in dem duplizierten optischen Kanal zu filtern, um den gefilterten optischen Kanal (Cᵢ*) zu erhalten; und
- das Einfügen (107) mindestens eines gemultiplexten optischen Ersatzteilbandes (SB') in den gefilterten optischen Kanal, als Ersatz für das zweite gemultiplexte optische Teilband, um einen modifizierten optischen Kanal (Cᵢ') zu erhalten, in dem die Breite des Durchlass-Spektralbandes der Bandpassfiltermittel und/oder des von den Bandsperrfiltermitteln abgewiesenen Spektralbandes in einem Frequenzband enthalten ist, das von 7 GHz bis 10 GHz reicht.

11. Verfahren zum Einfügen/Extrahieren (200) mindestens eines optischen Teilbandes in ein optisches Signal (S), das eine Vielzahl von wellenlängengemultiplexten optischen Kanälen (C₁, C₂, C₃) umfasst, wobei mindestens einer der optischen Kanäle eine Vielzahl von optischen Teilbändern umfasst, die mindestens zwei orthogonal frequenzgemultiplexte optische Signale umfassen, wobei das Verfahren umfasst:
- das Extrahieren (220) mindestens eines der optischen Kanäle (C₁), der mindestens ein zu extrahierendes und/oder zu ersetzendes gemultiplextes optisches Teilband umfasst;
- das Anwenden (230) des Verfahrens zum Einfügen/Extrahieren nach Anspruch 10 auf den extrahierten optischen Kanal, um mindestens ein erstes gemultiplextes optisches Teilband des extrahierten optischen Kanals (C₁) zu extrahieren und/oder mindestens einen modifizierten optischen Kanal (C₁') ausgehend von dem extrahierten optischen Kanal (C₁) zu erhalten, in den mindestens ein gemultiplextes optisches Ersatzteilband anstelle mindestens eines zweiten optischen Teilbandes eingefügt wird;
- das Erhalten (240) eines modifizierten optischen Signals (S') ausgehend von dem optischen Signal (S), in dem der extrahierte optische Kanal (C₁) durch den modifizierten optischen Kanal (C₁') ersetzt ist.

12. Verfahren zum Einfügen/Extrahieren (200) nach Anspruch 11, **gekennzeichnet durch** eine vorherige Duplikation (210) des optischen Signals (S) in mindestens ein erstes und ein zweites dupliziertes optisches Signal (S(1),S(2)), wobei das Extrahieren (220) des optischen Kanals (C₁) ausgehend von dem ersten duplizierten optischen Signal (S(1)) erfolgt und der Schritt des Erhaltens (240) des modifizierten optischen Signals (S') umfasst:
- das Erhalten (241) eines gefilterten optischen Signals (S*) ausgehend von dem zweiten duplizierten optischen Signal (S(2)), in dem das zweite gemultiplexte optische Teilband unterdrückt ist;
- die Aggregation (243) des gefilterten optischen Signals (S*) mit dem mindestens einen modifizierten optischen Kanal (C_{1'}), um das modifizierte optische Signal zu erhalten.

13. Verfahren zum Einfügen/Extrahieren (300) nach Anspruch 11, bei dem eine Vielzahl von gemultiplexten optischen Teilbändern, die in einer Vielzahl von ausgewählten optischen Kanälen enthalten sind, zu extrahieren und/oder zu ersetzen sind, **dadurch gekennzeichnet, dass**:
- die Anwendung (330) des Verfahrens zum Einfügen/Extrahieren nach Anspruch 11 für jeden der ausgewählten optischen Kanäle durchgeführt wird, um eine Vielzahl von modifizierten optischen Kanälen zu erhalten, in die mindestens ein gemultiplextes optisches Ersatzteilband eingefügt wird;
- die Vielzahl von modifizierten optischen Kanälen (339) vor dem Erhalten (340) des modifizierten optischen Signals zu einem aggregierten optischen Signal (R) aggregiert wird;
- der Aggregationsschritt (343) die Aggregation des gefilterten optischen Signals (S*) mit dem aggregierten optischen Signal (R) umfasst, um das modifizierte optische Signal (S') zu erhalten.

## Claims

1. Device (10) for inserting/extracting at least one optical subband into/from an optical channel (Cᵢ) composed of a plurality of optical subbands comprising at least two orthogonally frequency-multiplexed optical signals, the device comprising:
- a duplication means (11) able to duplicate the optical channel (Cᵢ) to a first duplication port (s₁) and a second duplication port (s₂):
- extraction means (13) able to extract a first multiplexed optical subband (SB) belonging to the optical channel (Cᵢ), consisting of bandpass filtering means connected to the first duplication port (s₁) so as to receive a first duplicated optical channel (Cᵢ(1)) and devised so as to let through, to an extraction port (s_{D}), the first multiplexed optical subband (SB) of the first duplicated optical channel;
- deletion means (15) devised so as to obtain a filtered optical channel (Cᵢ*) on the basis of the optical channel (Cᵢ) in which at least one second multiplexed subband (SB") is deleted, consisting of bandstop filtering means connected to the second duplication port (s₂) so as to receive a second duplicated optical channel (Cᵢ(2)) and devised so as to filter the second subband (SB") in said second duplicated optical channel so as to obtain the filtered optical channel (Cᵢ*);
- a coupling means (17) able to insert a replacement optical subband (SB') in place of the second multiplexed subband (SB") into the filtered optical channel (Cᵢ*) so as to obtain a modified optical channel (Cᵢ')
in which the width of the spectral passband of the bandpass filtering means and/or of the spectral band rejected by the bandstop filtering means lies in a frequency band ranging from 7 GHz to 10 GHz.

2. Insertion/extraction device (10) according to Claim 1, **characterized in that** the width of the spectral passband of the bandpass filtering means (13) and/or of the spectral band rejected by the bandstop filtering means (15) is adjustable.

3. Insertion/extraction device (10) according to any one of Claims 1 and 2, **characterized in that** the central frequency of the spectral passband of the bandpass filtering means (13) and/or of the spectral band rejected by the bandstop filtering means (15) is tunable.

4. Insertion/extraction device (10) according to any one of Claims 1 to 3, **characterized in that** the multiplexed optical subbands of the optical channel (Cᵢ) comprise at least two orthogonally frequency-multiplexed optical signals.

5. Insertion/extraction device (10) according to any one of Claims 1 to 4, **characterized in that** it comprises a device management module, connected to the bandpass filtering means (13) and to the bandstop filtering means (15), said device management module being devised so as to adjust the spectral passband of the bandpass filtering means (13) and the spectral band rejected by the bandstop filtering means (15) and to tune the central frequency of the spectral passband of the bandpass filtering means (13) and of the spectral band rejected by the bandstop filtering means (15).

6. Optical switch (20) for inserting/extracting at least one multiplexed optical subband belonging to at least one optical channel (C₁) composed of a plurality optical subbands comprising at least two orthogonally frequency-multiplexed optical signals, which is included in an optical signal (S) comprising a plurality of wavelength-multiplexed optical channels, said optical switch comprising:
- a selection module (23) able to select at least one optical channel (C₁) comprising at least one multiplexed optical subband to be extracted and/or to be replaced from among the multiplexed optical channels of the optical signal (S);
- at least one insertion/extraction device (10) according to one of Claims 1 to 5, connected to the selection module (23) and devised so as to extract at least one first multiplexed optical subband of the selected optical channel (C₁) and/or to provide a modified optical channel (C₁') obtained on the basis of the selected optical channel into which at least one replacement multiplexed optical subband is inserted;
- substitution means (25), connected to the insertion/extraction device (10) and devised so as to obtain a modified optical signal (S') by replacement of the at least one selected optical channel (C₁) by the at least one modified optical channel (C₁').

7. Insertion/extraction optical switch (20) according to Claim 6, **characterized in that** it furthermore comprises a duplication means (21) devised so as to duplicate the optical signal (S) on at least one first and one second output port, the first output port being connected to the selection module (23) so as to provide it with a first duplicated optical signal (S(1)) and the second output port being connected to the substitution means (25) so as to provide them with a second duplicated optical signal, and **in that** the substitution means (25) comprise:
- a blocking module (26) devised so as to receive the second duplicated optical signal (S(2)) and to provide as output a filtered optical signal (S*) in which the at least one selected optical channel (C₁) is deleted;
- a coupling means (27) devised so as to couple the filtered optical signal (S*) and the at least one modified optical channel (C₁') in order to obtain the modified optical signal (S').

8. Insertion/extraction optical switch (30) according to Claim 7, **characterized in that** it comprises a switch management module connected to the selection module (23) and to the blocking module (26), said switch management module being devised so as to control the selection module (23) and the blocking module (26) so as respectively to select and delete the at least one optical channel (C₁).

9. Insertion/extraction optical switch (30) according to any one of Claims 6 to 8, in which said switch comprises a plurality of insertion/extraction devices (10₁, 10ₘ) according to one of Claims 1 to 5, **characterized in that** the selection module (33) comprises:
- a deaggregation unit (33d) devised so as to transmit a plurality of selected optical channels (C₁, Cₘ), each comprising at least one optical subband to be extracted and/or replaced, respectively to each of the insertion/extraction devices (10₁, 10ₘ) ;
- an aggregation unit (33a) devised so as to aggregate the modified optical channels (C₁', Cₘ') obtained respectively by each of the insertion/extraction devices (10₁, 10ₘ) into an aggregated optical signal (R) transmitted to the substitution means (35).

10. Method (100) of inserting/extracting at least one optical subband into/from an optical channel (Cᵢ) comprising a plurality of optical subbands comprising at least two orthogonally frequency-multiplexed optical signals, said method comprising:
- the duplication (101) of the optical channel (Cᵢ) as a plurality of duplicated optical channels;
- the extraction (103) of at least one multiplexed first optical subband (SB) from one of the duplicated optical channels (Cᵢ) by bandpass filtering means devised so as to let through the first multiplexed optical subband (SB) of the duplicated optical channel;
- the obtaining (105) of a filtered optical channel (Cᵢ*) on the basis of one of the duplicated optical channels (Cᵢ) in which at least one second multiplexed optical subband is deleted by bandstop filtering means devised so as to filter the second multiplexed subband (SB") in said duplicated optical channel so as to obtain the filtered optical channel (Cᵢ*); and
- the insertion (107) of at least one replacement multiplexed optical subband (SB') into the filtered optical channel, as replacement for the second multiplexed optical subband, so as to obtain a modified optical channel (Cᵢ'),
in which the width of the spectral passband of the bandpass filtering means and/or of the spectral band rejected by the bandstop filtering means lies in a frequency band ranging from 7 GHz to 10 GHz.

11. Method (200) of inserting/extracting at least one optical subband into/from an optical signal (S) comprising a plurality of wavelength-multiplexed optical channels (C₁, C₂, C₃), at least one of said optical channels comprising a plurality of optical subbands comprising at least two orthogonally frequency-multiplexed optical signals, said method comprising:
- the extraction (220) of at least one of said optical channels (C₁) comprising at least one multiplexed optical subband to be extracted and/or to be replaced;
- the application (230) of the insertion/extraction method according to Claim 10 to the extracted optical channel, so as to extract at least one multiplexed first optical subband of the extracted optical channel (C₁) and/or to obtain at least one modified optical channel (C₁') on the basis of the extracted optical channel (C₁) in which at least one replacement multiplexed optical subband is inserted in place of at least one second optical subband;
- the obtaining (240) of a modified optical signal (S') on the basis of the optical signal (S) in which the extracted optical channel (C₁) is replaced with the modified optical channel (C₁').

12. Insertion/extraction method (200) according to Claim 11, **characterized by** a prior duplication (210) of the optical signal (S) as at least one first and one second duplicated optical signal (S(1),S(2)), the extraction (220) of the optical channel (C₁) being done on the basis of the first duplicated optical signal (S(1)), and the step (240) of obtaining the modified optical signal (S') comprising:
- the obtaining (241) of a filtered optical signal (S*) on the basis of the second duplicated optical signal (S(2)) in which the second multiplexed optical subband is deleted;
- the aggregation (243) of the filtered optical signal (S*) with the at least one modified optical channel (C_{1'}) in order to obtain the modified optical signal.

13. Insertion/extraction method (300) according to Claim 11, in which a plurality of multiplexed optical subbands included in a plurality of selected optical channels are to be extracted and/or replaced, **characterized in that**:
- the application (330) of the insertion/extraction method according to Claim 11 is performed for each of said selected optical channels so as to obtain a plurality of modified optical channels into which at least one replacement multiplexed optical subband is inserted;
- the plurality of modified optical channels is aggregated (339) as an aggregated optical signal (R) before the obtaining (340) of the modified optical signal;
- the aggregation step (343) comprises the aggregation of the filtered optical signal (S*) with the aggregated optical signal (R) in order to obtain the modified optical signal (S').
